(19) Europäisches Patentamt
European Patent Office
Office européen des brevets

(11) **EP 1 205 449 B1**

(12) **EUROPEAN PATENT SPECIFICATION**

(45) Date of publication and mention
of the grant of the patent:
**25.09.2013 Bulletin 2013/39**

(51) Int Cl.:
***C03B 37/027*** *(2006.01)*     ***C03B 37/029*** *(2006.01)*

(21) Application number: **00929884.5**

(22) Date of filing: **26.05.2000**

(86) International application number:
**PCT/JP2000/003412**

(87) International publication number:
**WO 2000/073224 (07.12.2000 Gazette 2000/49)**

(54) **PRODUCTION DEVICE AND METHOD FOR OPTICAL FIBER**

VORRICHTUNG UND VERFAHREN ZUR HERSTELLUNG VON OPTISCHEN FASERN

DISPOSITIF DE PRODUCTION ET PROCEDE POUR FIBRE OPTIQUE

(84) Designated Contracting States:
**DE FR GB**

(30) Priority: **27.05.1999 JP 14814999**
           **27.05.1999 JP 14814499**
           **27.05.1999 JP 14815399**

(43) Date of publication of application:
**15.05.2002 Bulletin 2002/20**

(73) Proprietor: **Sumitomo Electric Industries, Ltd.**
**Osaka-shi,**
**Osaka 541-0041 (JP)**

(72) Inventors:
• **NAGAYAMA, Katsuya,**
**Yokohama-shi,**
**Kanagawa 244-8588 (JP)**
• **SAITO, Tatsuhiko,**
**Yokohama-shi,**
**Kanagawa 244-8588 (JP)**
• **OHGA, Yuichi,**
**Yokohama-shi,**
**Kanagawa 244-8588 (JP)**
• **KUWAHARA, Kazuya,**
**Yokohama-shi,**
**Kanagawa 244-8588 (JP)**

(74) Representative: **Grünecker, Kinkeldey,**
**Stockmair & Schwanhäusser**
**Leopoldstrasse 4**
**80802 München (DE)**

(56) References cited:
**EP-A- 0 464 613**     **EP-A- 1 112 976**
**EP-A- 1 112 977**     **EP-A- 1 243 567**
**EP-A2- 0 321 182**     **DE-A1- 3 713 029**
**JP-A- 9 142 890**     **JP-A- 10 025 127**
**JP-A- 10 218 635**     **JP-A- 11 116 264**
**JP-A- 61 097 143**     **JP-A- 2000 128 566**

• **PATENT ABSTRACTS OF JAPAN vol. 010, no. 276 (C-373), 10 September 1986 (1986-09-10) -& JP 61 097143 A (FURUKAWA ELECTRIC CO LTD:THE), 15 May 1986 (1986-05-15)**
• **PATENT ABSTRACTS OF JAPAN vol. 010, no. 036 (C-328), 13 February 1986 (1986-02-13) -& JP 60 186430 A (NIPPON DENSHIN DENWA KOSHA), 21 September 1985 (1985-09-21)**
• **PATENT ABSTRACTS OF JAPAN vol. 012, no. 203 (P-715), 11 June 1988 (1988-06-11) -& JP 63 004207 A (SUMITOMO ELECTRIC IND LTD), 9 January 1988 (1988-01-09)**
• **PATENT ABSTRACTS OF JAPAN vol. 008, no. 046 (C-212), 29 February 1984 (1984-02-29) -& JP 58 204834 A (HITACHI SEISAKUSHO KK; others: 01), 29 November 1983 (1983-11-29)**

## Description

### Technical Field

The present invention relates to an apparatus and method for making an optical fiber whose transmission loss is reduced by lowering Rayleigh scattering intensity.

### Background Art

As a method of making an optical fiber whose transmission loss is reduced by lowering Rayleigh scattering intensity, one disclosed in Japanese Patent Application Laid-Open No. HEI 10-25127 has been known, for example. This method comprises the steps of producing an intermediate optical fiber by drawing an optical fiber preform upon heating, and heat-treating the intermediate optical fiber by reheating, so that the reheating causes structural relaxation (atomic rearrangement) inglass, which lowers the fictive temperature (temperature to which the disorder in the state of atomic arrangement within the glass corresponds), thereby reducing Rayleigh scattering intensity.

EP 0 464 613 A1 relates to a process of drawing optical fibers. JP 61 097143 A is directed to a device for preparing single polarzation optical fibers. DE 37 13 029 A1 discloses a process for producing glass fibers.

### Disclosure of the Invention

However, for protecting the optical fiber drawn upon heating, the surface of optical fiber immediately after drawing has been coated with a UV resin or the like. Since the resin coated on the optical fiber may be burned by the heat at the time of reheating, the above- mentioned method of making an optical fiber disclosed in Japanese Patent Application Laid- Open No. HEI 10- 25127 is not suitable for mass- producing optical fiber. Though the optical fibers may be reheated in a state where its surface is not coated with a resin, this method is not employable as a method for mass production due to damages occurring at the time of handling the optical fiber, and the like.

In view of the above-mentioned points, it is an object of the present invention to provide, when making an optical fiber whose transmission loss is lowered by reducing Rayleigh scattering intensity, an apparatus and method for making an optical fiber, which is applicable to the mass production of optical fiber whose surfaces are coated with a resin.

The inventors carried out diligent studies about an apparatus and method for making an optical fiber which is applicable to the mass production of coated optical fiber and, as a result, have newly found the following fact concerning the Rayleight scattering intensity and the cooling rate of the optical fiber after drawing.

Within glass at a higher temperature, atoms are vigorously vibrating due to thermal energy, whereby the atomic arrangement is in a state more disordered than in glass at a lower temperature. If the glass at a higher temperature is slowly cooled, the atoms within a temperature range where they are allowed to be rearranged are cooled while being arranged with the level of disorder corresponding each temperature, whereby the level of disorder of the atoms within the glass attains the state corresponding to the lowest temperature (about 1200°C) at which the structural relaxation proceeds. If glass at a higher temperature is cooled rapidly, the atomic arrangement is fixed upon cooling before reaching an equilibrium state corresponding to each temperature, thus yielding a more disordered state than in the case of annealing. Even in the same material, the Rayleigh scattering intensity becomes greater when the atomic arrangement is more disordered. Optical fibers usually cooled at a cooling rate of 5000 to 30000°C/s after drawing are in a state yielding a more disordered atomic arrangement and a higher fictive temperature as compared with bulk glass, which is supposed to be a reason why Rayleigh scattering intensity is greater.

On the other hand, the time required for structural relaxation becomes longer as temperature is lower, whereby the structural relaxation does not occur at a temperature of about 1200°C unless this temperature is held for several tens of hours, for example. Since the optical fiber after drawing is normally cooled from about 2000°C to about 400°C within several hundreds of milliseconds, it is necessary that the annealing be effected in a state at a temperature higher than 1200°C in order for the fictive temperature to be lowered to approach 1200°C within a short period of time during which the optical fiber in its drawing step is cooled.

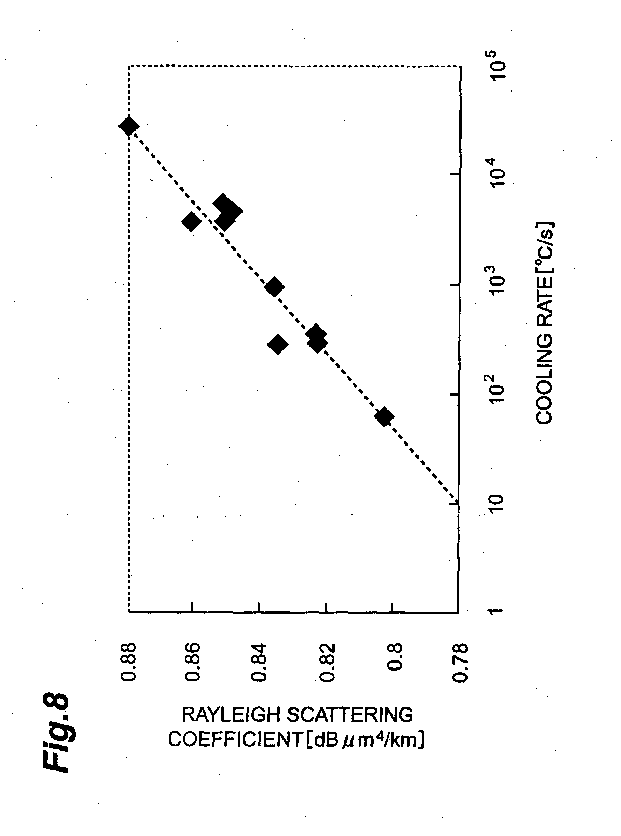

Therefore, taking account of the optical fiber temperature and cooling rate after drawing, the inventors investigated the relationship between the cooling rate and Rayleigh scattering coefficient in a part of optical fiber where the temperature was within the range from 1200 to 1700°C, which was higher than the lowest temperature (about 1200°C) at which the above- mentioned structural relaxation proceeded but not exceeding 1700°C at which the structural relaxation proceeded within a very short period of time. As a result, it has been verified that the relationship shown in Fig. 8 exists between the cooling rate and Rayleigh scattering coefficient in a part of optical fiber where the temperature is 1200 to 1700°C. Here, Rayleigh scattering intensity (I) has such a characteristic as to be inversely proportional to the biquadrate of wavelength ($\lambda$) as shown in the following expression (1) :

$$I = A/\lambda^4 \qquad (1)$$

where coefficient A is defined as Rayleigh scattering coefficient.

From these results, it has been found that, if the cooling rate in a predetermined segment in an optical fiber drawn upon heating before being coated with a resin, in particular in a part of optical fiber where the temperature is 1200 to 1700°C, is lowered, then the Rayleigh scattering intensity of optical fiber is reduced, whereby the transmission loss can be lowered.

In view of such results of studies, for achieving the above-mentioned object, the present invention provides a use of an apparatus, according to claim 1, for making an optical fiber for drawing an optical fiber preform upon heating and coating thus drawn optical fiber with a resin.

Since the heating furnace for heating the drawn optical fiber such that the optical fiber attains a temperature within the range from 1200 to 1700°C is disposed between the drawing furnace and resin coating section, the cooling rate is lowered in a predetermined segment of the part of optical fiber where the temperature is 1200 to 1700°C in the optical fiber drawn upon heating before being coated with the resin, whereby this part is annealed. Therefore, the optical fiber lowers its fictive temperature, whereby it becomes possible to make an optical fiber having decreased its transmission loss by reducing its Rayleigh scattering intensity during a period from the drawing upon heating to the resin coating. Also, since the Rayleigh scattering intensity is reduced by controlling the cooling rate of optical fiber after drawing before being coated with a resin, the heat treatment for reheating such as that in the above-mentioned prior art is unnecessary, whereby the apparatus is quite easily applicable to the mass production of optical fiber whose surfaces are coated with a resin.

In the case where the drawing rate is higher, the position where the drawn optical fiber attains a given temperature shifts toward the resin coating section as compared with that in the case where the drawing rate is lower. Therefore, if the muffle tube is located at a position satisfying

$$L1 \leq 0.2 \times V ,$$

then it can be placed at an appropriate position corresponding to the level of drawing rate, whereby the cooling rate of optical fiber can be lowered appropriately.

Preferably, in the use of an apparatus for making an optical fiber in accordance with the present invention, the heating furnace may heat the drawn optical fiber at a temperature within the range from 1200 to 1600°C.

When the heating furnace heats the drawn optical fiber at a temperature within the range from 1200 to 1600°C, the cooling rate of the optical fiber lowers in a predetermined segment in the part of optical fiber where the temperature is 1200 to 1700°C, so that the fictive temperature of the optical fiber decreases, whereby the Rayleigh scattering temperature can further be reduced. Here, the temperature of heating furnace is that near the furnace center. For example, the temperature of heater is set to about 1700°C in order for the temperature near the furnace center to become about 1600°C.

Preferably, in the use of an apparatus for making an optical fiber in accordance with the present invention, the muffle tube may be disposed at a position where the drawn optical fiber attains a temperature within the range from 1400 to 1800°C when entering the muffle tube.

If the muffle tube is disposed at a position where the drawn optical fiber attains a temperature within the range from 1400 to 1800°C when entering the muffle tube, then it is placed at an appropriate position corresponding to the level of drawing rate, whereby the cooling rate of optical fiber can be lowered appropriately.

In the use of apparatus for making an optical fiber in accordance with the present invention, the muffle tube may be formed so as to satisfy:

$$L2 \geq V/8$$

where
L2 is the total length (m) of the muffle tube; and V is the drawing rate (m/s).

When the total length L2 of the muffle tube satisfies

$$L2 \geq V/8 ,$$

it can be set to an appropriate length corresponding to the level of drawing rate, whereby the cooling rate of the optical fiber can be lowered appropriately.

Preferably, in the use of an apparatus for making an optical fiber in accordance with the present invention, the heating furnace may be provided with such a temperature gradient that the drawing furnace side and the resin coating section side attain higher and lower temperatures, respectively.

The optical fiber drawn upon heating has such a temperature distribution that the temperature decreases from the drawing furnace side to the resin coating section side. Therefore, when the heating furnace is provided with such a temperature gradient that the drawing furnace side and the resin coating section side attain higher and lower temperatures, respectively, the heating furnace exhibits a temperature distribution corresponding to the optical fiber having the temperature distributionmentioned above, whereby the optical fiber can be cooled at a more appropriate cooling rate.

In view of the above-mentioned results of studies, for achieving the above-mentioned object, the present invention provides a method of making an optical fiber comprising the  steps of drawing an optical fiber preform upon heating and coating thus drawn optical fiber with a resin; wherein a segment of optical fiber yielding a temperature difference of at least 50°C in a part where the optical fiber before being coated with the resin attains a temperature of 1300 to 1700°C is cooled at a cooling rate of 1000°C/s or lower.

When the cooling rate in the segment of optical fiber yielding a temperature difference of at least 50°C in a part where the optical fiber before being coated with the resin attains a temperature of 1300 to 1700°C is set to 1000°C/s or lower, the fictive temperature of optical fiber lowers, so that the disorder in atomic arrangement is reduced, whereby it is possible to make an optical fiber having lowered its transmission loss by reducing the Rayleigh scattering intensity within a very short period from the drawing upon heating to the resin coating. Also, since the Rayleigh scattering intensity is reduced by controlling the cooling rate of optical fiber after drawing before being coated with a resin, the heat treatment for reheating such as that in the above-mentioned prior art is unnecessary, whereby the method is quite easily applicable to the mass production of optical fiber whose surfaces are coated with a resin.

The method of making an optical fiber in accordance with the present invention may use, as the optical fiber preform, an optical fiber preform having a core portion exhibiting a relative refractive index difference of 0.001  or less with respect to pure silica glass in a state containing a dopant, and draw the optical fiber preform upon heating.

Since the core portion is made of substantially pure silica glass exhibiting a relative refractive index difference of 0.001 or less with respect to pure silica glass in a state containing a dopant, the optical fiber further lowers its fictive temperature, whereby it is possible to further lower the Rayleigh scattering intensity. Here, pure silica glass in each claim refers to silica glass containing no dopant, whereas the relative refractive index difference is defined by the following expression (2):

$$\text{relative refractive index difference} = |n1 - \text{refractive index of object to be compared}|/n1 \quad \cdots \quad (2)$$

where n1 is the refractive index of pure silica glass.

The method of making an optical fiber in accordance with the present invention may use, as the optical fiber preform, an optical fiber preform whose core portion is caused to contain hydroxyl group so as to yield a transmission loss of 0.02 to 0.5 dB/km due to hydroxyl group absorption at a wavelength of 1.38 $\mu$m, and draw the optical fiber preform upon heating.

When hydroxyl group is contained such that the transmission loss caused by hydroxyl group absorption at a wavelength of 1.38 $\mu$m becomes at least 0.02 dB/km, the optical fiber further lowers its fictive temperature, whereby the Rayleigh scattering intensity can further be reduced. When hydroxyl group is contained such that the transmission loss is greater than 0.5 dB/km, on the other hand, the loss increases due to the absorption by hydroxyl group, which cancels out the effect of reducing Rayleigh scattering intensity caused by the addition of hydroxyl group, whereby the transmission loss as a whole increases. Therefore, when the core portion is caused to contain hydroxyl group so as to yield a transmission loss of 0.02 to 0.5 dB/km due to hydroxyl group absorption at a wavelength of 1.38 $\mu$m, the optical fiber further lowers its fictive temperature, whereby the Rayleigh scattering intensity can further be reduced.

The method of making an optical fiber in accordance with the present invention may use, as the optical fiber preform, an optical fiber preform whose core portion is caused to contain Cl so as to yield a relative refractive index difference of 0.0001 to 0.001 with respect to pure silica glass, and draw the optical fiber preform upon heating.

When Cl is contained such that the relative refractive index difference with respect to pure silica glass is at least 0.0001, the optical fiber further lowers its fictive temperature, whereby the Rayleigh scattering intensity can further be lowered. When Cl is contained such that the relative refractive index difference exceeds 0.001, the Rayleigh scattering intensity is enhanced by Cl itself, which cancels out the effect of lowering Rayleigh scattering intensity caused by the addition of Cl, whereby the total transmission loss increases. Therefore, when Cl is contained in the core portion such that the relative refractive index difference with respect to pure silica glass is 0.0001 to 0.001, the optical fiber further lowers its fictive temperature, whereby the Rayleigh scattering intensity can further be lowered.

The method of making an optical fiber in accordance with the present invention may use, as the optical fiber preform, an optical fiber preform having a cladding portion whose part extending to the outermost periphery from a position where the distance from the center of the optical fiber preform is within the range from 0.7 to 0.9 in terms of the ratio with respect to the radius of the optical fiber preform is made of highly pure silica glass, and draw the optical fiber preform upon heating.

As a result of the inventors' studies, it has become clear that the Rayleigh scattering intensity increases when the tension acting on the optical fiber upon drawing is enhanced, whereas the Rayleigh scattering intensity does not change when the outermost layer of optical fiber preform unrelated to light transmission is made of highly pure silica glass even if the above-mentioned tension is enhanced. When the part related to light transmission is made of highly pure silica glass, the refractive index changes, thereby modifying characteristics of the optical fiber. While the part unrelated to light transmission is a part where the distance from the center of the optical fiber preform is at least 0.7 in terms of the ratio with respect to the radius of optical fiber preform, the transmission loss will be greater if the part on the outer periphery side of the position where the distance from the center is greater than 0.9 in terms of the ratio with respect to the radius of optical fiber preform is made of pure silica glass since the Rayleigh scattering intensity changes when the tension is made greater. Therefore, by using an optical fiber having a cladding portion whose part extending to the outermost periphery from a position where the distance from the center of the optical fiber preform is within the range from 0.7 to 0.9 in terms of the ratio with respect to the radius of the optical fiber preform is made of highly pure silica glass, the Rayleigh scattering intensity is restrained from increasing even when a high tension acts on the optical fiber, whereby the increase in loss can be suppressed. Here, the highly pure silica glass refers to silica glass whose relative refractive index difference with respect to pure silica glass in a state containing a dopant or the like is 0.001 or less

In the method of making an optical fiber in accordance with the present invention, a part of the optical fiber having a temperature higher than 1700°C before being coated with the resin may be cooled at a cooling rate of 4000°C/s or higher.

When the part of optical fiber having a temperature higher than 1700°C is cooled at a cooling rate of 4000°C/s or higher, the height of equipment for carrying out drawing can be lowered. Since the structural relaxation of atoms proceeds in a very short period of time, the equilibrium state at each temperature can be maintained even when cooled at a cooling rate of 4000°C/s or higher, whereby no influence is exerted upon the Rayleigh scattering intensity.

In view of the above-mentioned results of studies, for achieving the above-mentioned object, the present invention provides an apparatus for making an optical fiber for drawing an optical fiber preform upon heating and coating thus drawn optical fiber with a resin; the apparatus comprising a heating furnace, disposed between a drawing furnace for drawing the optical fiber preform upon heating and a resin coating section for coating the drawn optical fiber with the resin, for heating the drawn optical fiber such that a segment of the optical fiber yielding a temperature difference of at least 50°C in a part of the optical fiber attaining a temperature of 1300 to 1700°C is cooled at a cooling rate of 1000°C/s or less.

Since the segment of optical fiber yielding a temperature difference of at least 50°C in the part of optical fiber before being coated with a resin where the temperature ranges from 1300 to 1700°C is slowly cooled at a cooling rate of 1000°C/s or less by the heating furnace disposed between the drawing furnace and the resin coating section, the optical fiber further lowers its fictive temperature, and the disorder in atomic arrangement is reduced, whereby it is possible to make an optical fiber having lowered its transmission loss by reducing the Rayleigh scattering intensity within a very short period from the drawing upon heating to the resin coating. Also, since the Rayleigh scattering intensity is reduced by controlling the cooling rate of optical fiber after drawing before being coated with a resin, the heat treatment for reheating such as that in the above-mentioned prior art is unnecessary, whereby the apparatus is quite easily applicable to the mass production of optical fiber whose surfaces are coated with a resin.

The apparatus for making an optical fiber in accordance with the present invention may further comprise atmosphere gas supplying means for supplying, as an atmosphere gas of the optical fiber within the heating furnace, an atmosphere gas having a thermal conductivity on a par with or lower than that of an atmosphere gas in the drawing furnace.

When the atmosphere gas supplying means is further provided, the atmosphere gas of optical fiber within the heating furnace lowers its thermal conductivity, so that the cooling rate within the heating furnace can be lowered, which enables the optical fiber to further lower its transmission loss.

The apparatus for making an optical fiber in accordance with the present invention may further comprise outside diameter measuring means for measuring the outside diameter of the optical fiber having exited from the heating furnace, and control means for controlling the drawing rate of the optical fiber according to a result of measurement by the outside diameter measuring means such that the outside diameter of the optical fiber attains a predetermined value.

When the control means is further provided, the outside diameter of the optical fiber in which the outer diameter length is in a stable state is measured, and the drawing rate of optical fiber is controlled according to thus measured outside diameter, whereby the drawing rate of optical fiber can appropriately be controlled.

## Brief Description of the Drawings

Fig. 1 is a schematic diagram showing a first embodiment of the apparatus and method for making an optical fiber in accordance with the present invention;

Fig. 2 is a chart showing examples according to the first embodiment of the apparatus and method for making an optical fiber in accordance with the present invention, and comparative examples;

Fig. 3 is a schematic diagram showing a modified example of the first embodiment of the apparatus and method for making an optical fiber in accordance with the present invention;

Fig. 4 is a schematic diagram showing a modified example of the first embodiment of the apparatus and method for making an optical fiber in accordance with the present invention;

Fig. 5 is a schematic diagram showing a second embodiment of the apparatus and method for making an optical fiber in accordance with the present invention;

Fig. 6 is a chart showing examples according to the second embodiment the apparatus and method for making an optical fiber in accordance with the present invention, and comparative examples;

Fig. 7A is a diagram showing the optical fiber preform used in an experimental example of the second embodiment of the apparatus and method for making an optical fiber in accordance with the present invention;

Fig. 7B is a chart showing the refractive index of the optical fiber preform used in the experimental example of the second embodiment of the apparatus and method for making an optical fiber in accordance with the present invention; and

Fig. 8 is a chart showing the relationship between the cooling rate and Rayleigh scattering coefficient of the optical fiber preform.

## Best Modes for Carrying Out the Invention

Embodiments of the present invention will be explained with reference to the drawings. In the explanation of the drawings, constituents identical to each other will be referred to with numerals or letters identical to each other without repeating their overlapping descriptions.

## First Embodiment

To begin with, a first embodiment of the apparatus and method for making an optical fiber in accordance with the present invention will be explained.

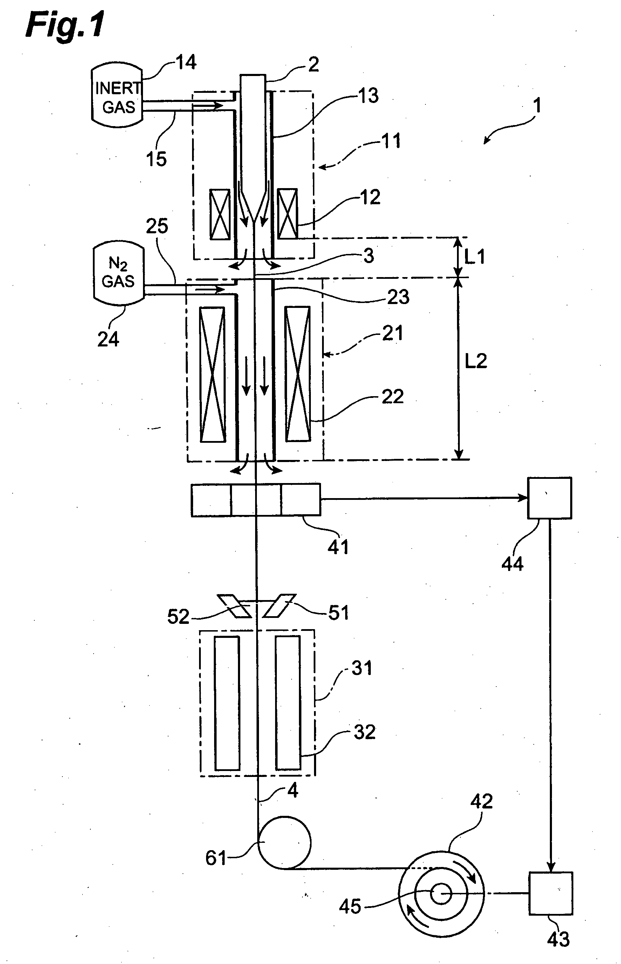

A drawing apparatus 1 is an apparatus for drawing silica type optical fiber; and comprises a drawing furnace 11, a heating furnace 21 for annealing, and a resin curing section 31, which are disposed in this order in the direction of drawing an optical fiber preform 2 (from the upper side to the lower side in Fig. 1). The optical fiber preform 2 held by a preform supplying apparatus (not depicted) is supplied to the drawing furnace 11, and the lower end of the optical fiber preform 2 is heated and softened by a heater 12 within the drawing furnace 11, so as to draw an optical fiber 3. An inert gas supplypassage 15 from an inert gas supply section 14 is connected to a muffle tube 13 of the drawing furnace 11, so that an inert gas atmosphere is attained within the muffle tube 13 of drawing furnace 11. The optical fiber 3 drawn upon heating is rapidly cooled to about 1700°C by the inert gas within the muffle tube 13. Thereafter, the optical fiber 3 is taken out of the drawing furnace 11 from the lower part of the muffle tube 13, and is cooled with air between the drawing furnace 11 and the heating furnace 21. As the inert gas, $N_2$ gas can be used, for example. This $N_2$ gas has a thermal conductivity coefficient $\lambda$ (T=300K) of 26 mW/(m·K). The thermal conductivity coefficient $\lambda$ (T = 300 K) of air is 26 mW/(m·K).

The air-cooled optical fiber 3 is sent to the heating furnace 21, so that a predetermined segment of the optical fiber 3 is heated and then is annealed at a predetermined cooling rate. The heating furnace 21 has a muffle tube 23 through which the optical fiber 3 passes. The muffle tube 23 is set such that its total length L2 (m) in the drawing direction of the optical fiber preform 2 (in the vertical direction of Fig. 1) satisfies:

$$L2 \geq V/8 \qquad\qquad (3)$$

6

where V is the drawing rate (m/s). Also, in the heating furnace 21, the muffle tube 23 is set at a position where the temperature (entering temperature) of the optical fiber immediately before entering the muffle tube 23 falls within the range from 1400 to 1800°C, so as to satisfy, with respect to the drawing furnace 11,

$$L1 \leq 0.2 \times V \qquad\qquad (4)$$

where

L1 is the distance (m) from the lower end of heater 12 of drawing furnace 11 to the upper end of muffle tube 23; and V is the drawing rate (m/s). Thetemperatureofaheater 22 in the heating furnace 21 is set such that the temperature at the furnace center (the part through which the optical fiber 3 passes) attains a temperature within the range from 1200 to 1600°C, in particular within the range from 1300 to 1500°C.

Upon the above-mentioned setting of position and length of heating furnace 21 (muffle tube 23), the segment of optical fiber 3 yielding a temperature difference of at least 50°C in the part of optical fiber 3 drawn upon heating where the temperature ranges from 1200 to 1700°C in the heating furnace 21, e.g., the part where the temperature of optical fiber 3 ranges from 1400 to 1600°C (the segment yielding a temperature difference of 200°C) is annealed at a cooling rate of 1000°C/s or less. Here, when the temperature of furnace center is set to a temperature within the range from 1300 to 1600°C, the section where the optical fiber 3 yields a temperature difference of at least 50°C in the part of optical fiber 3 drawn upon heating where the temperature ranges from 1400 to 1600°C is annealed at a cooling rate of 1000°C/s or less.

Connected to the muffle tube 23 of heating furnace 21 is an $N_2$ gas supply passage 25 from an $N_2$ gas supply section 24, so that the muffle tube 23 of heating furnace 21 attains an $N_2$ gas atmosphere therewithin. In place of $N_2$ gas, gases having a relatively large molecular weight such as air and Ar, and the like can be used as well. When a carbon heater is employed, it is necessary to use an inert gas as a matter of course.

Of the optical fiber 3 having exited from the heating furnace 21, the outside diameter is measured online by an outside diameter meter 41 acting as outside diameter measuring means, and thus measured value is fed back to a driving motor 43 for driving a drum 42 to rotate, such that the outside diameter is controlled so as to become constant. The output signal from the outside diameter meter 41 is sent to a control unit 44 acting as control means, where the rotating speed of drum 42 (driving motor 43) is determined by an arithmetic operation such that the outside diameter of optical fiber 3 attains a predetermined value which has been set beforehand. The output signal indicative of the rotating speed of drum 42 (driving motor 43) determined by the arithmetic operation is outputted from the control unit 44 to a driving motor driver (not depicted), whereas the driving motor driver controls the rotating speed of the driving motor 43 according to the output signal from the control unit 44.

Thereafter, the optical fiber 3 is coated with a UV resin 52 by a coating die 51, and the UV resin 52 is cured by a UV lamp 32 of the resin curing section 31, whereby a coated optical fiber 4 is obtained. By way of a guide roller 61, the coated optical fiber 4 is taken up by the drum 42. The drum 42 is supported by a rotary driving shaft 45, whereas an end part of the rotary driving shaft 45 is connected to the driving motor 43. Here, the coating die 51 and the resin curing section 31 constitute the resin coating section in each claim. The resin coating section may be configured so as to apply a thermosetting resin, which is to be cured by a heating furnace.

Though the inert gas supply passage 15 from the inert gas supply section 14 is connected to the muffle tube 13 of drawing furnace 11 so that an inert gas atmosphere is attained within the muffle tube 13 of drawing furnace 11, an $N_2$ gas supply section may be provided as the inert gas supply section 14 so as to supply $N_2$ gas into the muffle tube 13 such that an $N_2$ gas atmosphere is attained therein. When the drawing rate is low, e.g., 100 m/min, the optical fiber 3 may be cooled to about 1000°C within the drawing furnace 11 (muffle tube 13) in an He gas atmosphere. This is the reason why $N_2$ gas is supplied into the muffle tube 13, so as to attain an $N_2$ gas atmosphere within the muffle tube 13, thereby causing the optical fiber 3 to attain a temperature of about 1700°C at the exit of drawing furnace 11 (muffle tube 13). As a matter of course, He gas supply section and $N_2$ gas supply section may be provided, so as to supply He gas and/or $N_2$ gas into the muffle tube 13 in response to the drawing rate.

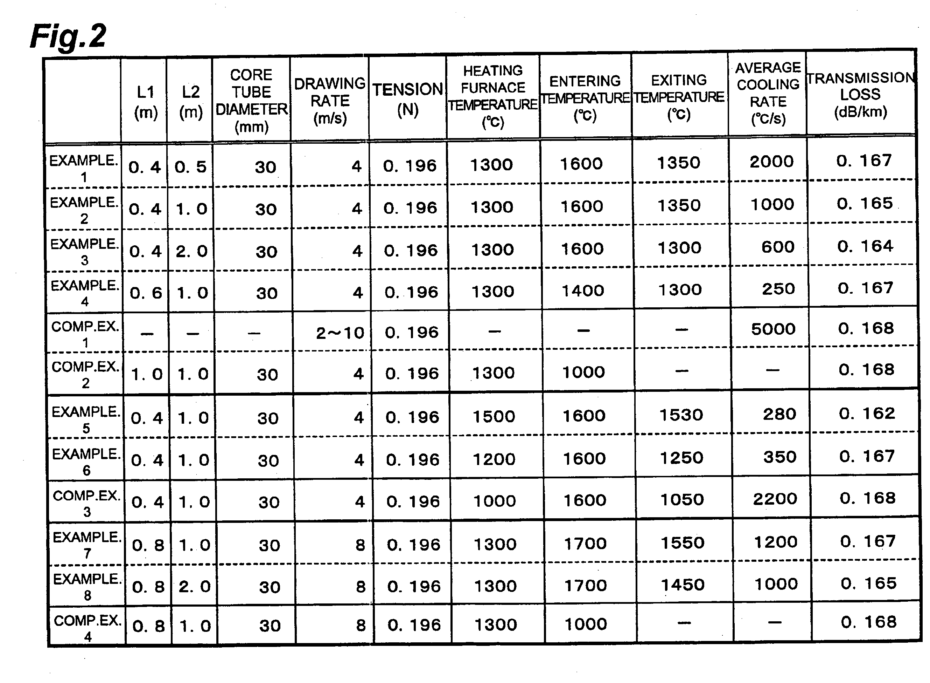

Next, with reference to Fig. 2, results of experiments according to the apparatus and method for making an optical fiber in accordance with the first embodiment using the above-mentioned drawing apparatus 1 will be explained. The conditions common in these experiments are as follows. As the optical fiber preform 2, one having an outside diameter of 35 mm was used, and an optical fiber 3 having an outside diameter of 125 $\mu$m was drawn from the optical fiber preform 2. The temperature of drawing furnace was about 2000°C at the surface of the inner periphery of the muffle tube. In the following Examples 1 to 8 and Comparative Examples 1 to 4, the surface temperature of optical fiber 3 is taken as the temperature of optical fiber 3. The difference between the surface temperature of optical fiber 3 and the temperature within the optical fiber 3 is on the order of 20 to 100°C. The surface temperatures of the inner peripheral faces (surfaces opposing the surfaces of optical fiber preform 2 and optical fiber 3) of muffle tubes 13, 23 are taken as the temperatures of drawing furnace 11 and heating furnace 21, respectively. In each of Examples 1 to 8 and Comparative Examples 1 to 4, $N_2$ gas was used as the inert gas.

Examples 1 to 4 are examples according to the apparatus and method for making an optical fiber in accordance with the above-mentioned first embodiment, whereas Comparative Examples 1 and 2 are comparative examples carried out for comparison with the examples according to the apparatus and method for making an optical fiber in accordance with the above-mentioned first embodiment.

**Example 1**

Using a heating furnace having a muffle tube (with an inner peripheral diameter of about 30 mm) in which L1 = 0.4 m and L2 = 0.5 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1300°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1350°C in terms of the surface temperature of optical fiber. Hence, in the heating furnace, the part attaining a temperature of 1600 to 1350°C in the drawn optical fiber is assumed to have been cooled at an average annealing rate of about 2000°C/s in a segment of 0.5 m which is the total length of heating furnace.

As for the position of muffle tube, 0.4 < 0.8 (= 4 x 0.2), thereby satisfying the above-mentioned expression (4). As for the total length of muffle tube, 0.5 = 0.5 (= 4/8), thereby satisfying the above-mentioned expression (3). The transmission loss of drawn optical fiber (transmission loss with respect to light having a wavelength of 1.55 $\mu$m) was measured and found to be 0.167 dB/km.

**Example 2**

Using a heating furnace having a muffle tube (with an inner peripheral diameter of about 30 mm) in which L1 = 0.4 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1300°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1350°C in terms of the surface temperature of optical fiber. Hence, in the heating furnace, the part attaining a temperature of 1600 to 1350°C in the drawn optical fiber is assumed to have been cooled at an average annealing rate of about 1000°C/s in a segment of 1.0 m which is the total length of heating furnace.

As for the position of muffle tube, 0.4 < 0.8 (= 4 x 0.2), thereby satisfying the above-mentioned expression (4). As for the total length of muffle tube, 1.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.165 dB/km.

**Example 3**

Using a heating furnace having a muffle tube (with an inner peripheral diameter of about 30 mm) in which L1 = 0.4 m and L2 = 2.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1300°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1300°C in terms of the surface temperature of optical fiber. Hence, in the heating furnace, the part attaining a temperature of 1600 to 1300°C in the drawn optical fiber is assumed to have been cooled at an average annealing rate of about 600°C/s in a segment of 2.0 m which is the total length of heating furnace.

As for the position of muffle tube, 0.4 < 0.8 (= 4 x 0.2), thereby satisfying the above-mentioned expression (4). As for the total length of muffle tube, 2.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.164 dB/km.

**Example 4**

Using a heating furnace having a muffle tube (with an inner peripheral diameter of about 30 mm) in which L1 = 0.6 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1300°C, respectively. In this case, the temperature of the optical fiber immediately before entering the heating furnace (entering temperature) was 1400°C in terms of the surface temperature of optical fiber, whereas the temperature of the optical fiber immediately after exiting from the heating furnace was 1300°C in terms of the surface temperature of optical fiber. Hence, in the heating furnace, the part attaining a temperature of 1400 to 1300°C in the drawn optical fiber is assumed to have been cooled at an average annealing rate of about 250°C/s in a segment of 1.0 m which is the total length of heating furnace.

As for the position of muffle tube, 0.8 = 0.8 (= 4 x 0.2), thereby satisfying the above-mentioned expression (4). As for the total length of muffle tube, 1.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.167 dB/km.

**Comparative Example 1**

An optical fiber was drawn in a state where the heating furnace was removed. The optical fiber preform to be drawn had a core portion made of pure silica glass and a cladding portion made of fluorine-doped glass. The drawing rate and the drawing tension were set to 2 to 10 m/s and 0.196 N (20 gf), respectively. In this case, the part of optical fiber attaining a temperature of 1300 to 1700°C was cooled at an annealing rate of about 5000°C/s.

The transmission loss of drawn optical fiber (transmission loss with respect to light having a wavelength of 1.55 $\mu$m) was measured and found to be 0.168 dB/km, and there was no dependence on the drawing rate.

**Comparative Example 2**

Using a heating furnace having a muffle tube (with an inner peripheral diameter of about 30 mm) in which L1 = 1.0 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 $N$ (20 gf), and 1300°C, respectively. In this case, the temperature of the optical fiber immediately before entering the heating furnace (entering temperature) was 1000°C in terms of the surface temperature of optical fiber.

As for the position of muffle tube, 1.2 > 0.8 (= 4 x 0.2), thereby failing to satisfy the above-mentioned expression (4). As for the total length of muffle tube, 1.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.168 dB/km as with the transmission loss in Comparative Example 1 in which the heating furnace was removed.

As in the foregoing, it has been verified that the transmission loss with respect to light having a wavelength of 1.55 $\mu$m is 0.164 to 0.167 dB/km in Examples 1 to 4, and thus can be lowered by the range of 0.001 to 0.004 dB/km from the transmission loss of 0.168 dB with respect to light having a wavelength of 1.55 $\mu$m in Comparative Examples 1 and 2. If L1 as the position of muffle tube of heating furnace is made greater than 0.8 m (so as to be distanced from the drawing furnace) when the drawing rate is 4 m/s, it will be harder to heat the part of optical fiber attaining a temperature of 1200 to 1700°C after drawing, so that the cooling rate in this part cannot be lowered, whereby the transmission loss will increase. Also, even when the muffle tube of heating furnace is disposed at a position satisfying expression (4), if the total length of muffle tube is shorter than 0.5m, it will be harder to heat the part of drawn optical fiber attaining a temperature of 1200 to 1700°C, so that the cooling rate in this part cannot be lowered, whereby the transmission loss will increase.

Next, experiments were carried out while changing temperature conditions of the heating furnace (surface temperature of inner peripheral face of muffle tube) . Examples 5 and 6 are examples according to the apparatus and method for making an optical fiber in accordance with the above- mentioned first embodiment, whereas Comparative Example 3 is a comparative example carried out for comparison with the examples according to the apparatus and method for making an optical fiber in accordance with the above- mentioned first embodiment.

**Example 5**

Using a heating furnace having a muffle tube (with an inner peripheral diameter of about 30 mm) in which L1 = 0.4 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1500°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1530°C in terms of the surface temperature of optical fiber. Hence, in the heating furnace, the part attaining a temperature of 1600 to 1530°C in the drawn optical fiber is assumed to have been cooled at an average annealing rate of about 280°C/s in a segment of 1.0 m which is the total length of heating furnace.

As for the position of muffle tube, 0.4 < 0.8 (= 4 x 0.2), thereby satisfying the above-mentioned expression (4). As for the total length of muffle tube, 1.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.162 dB/km.

**Example 6**

Using a heating furnace having a muffle tube (with an inner peripheral diameter of about 30 mm) in which L1 = 0.4 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1200°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1250°C in terms of the surface temperature of optical fiber. Hence, in the heating furnace, the part attaining a temperature of 1600 to 1250°C in the drawn optical fiber is assumed to have been cooled at an average annealing rate of about 350°C/s in a segment of 1.0 m which is the total length of heating furnace.

As for the position of muffle tube, 0.4 < 0.8 (= 4 x 0.2), thereby satisfying the above-mentioned expression (4). As for the total length of muffle tube, 1.0 > 0.5 (= 4/8), thereby satisfying the above-mentioned expression (3). The transmission loss of drawn optical fiber (transmission loss with respect to light having a wavelength of 1.55 $\mu$m) was measured and found to be 0.167 dB/km.

**Comparative Example 3**

Using a heating furnace having a muffle tube (with an inner peripheral diameter of about 30 mm) in which L1 = 0.4 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 4 m/s, 0.196 N (20 gf), and 1000°C, respectively. In this case, the temperature of the optical fiber immediately before entering the heating furnace (entering temperature) was 1600°C in terms of the surface temperature of optical fiber, whereas the temperature of the optical fiber immediately after exiting from the heating furnace was 1050°C in terms of the surface temperature of optical fiber. Hence, in the heating furnace, the part attaining a temperature of 1600 to 1050°C in the drawn optical fiber is assumed to have been cooled at an average annealing rate of about 2200°C/s in a segment of 1.0 m which is the total length of heating furnace.

In Comparative Example 3, as for the position of muffle tube, 0.4 < 0.8 (= 4 x 0.2), thereby satisfying the above-mentioned expression (4). As for the total length of muffle tube, 1.0 > 0.5 (= 4/8), thereby satisfying the above-mentioned expression (3). However, the optical fiber failed to attain a temperature of 1200°C or higher in the part of heating furnace. The transmission loss of drawn optical fiber (transmission loss with respect to light having a wavelength of 1.55 $\mu$m) was measured and found to be 0.168 dB/km as with the transmission loss in Comparative Example 1 in which the heating furnace was removed.

As in the foregoing, it has been verified that the transmission loss with respect to light having a wavelength of 1.55 $\mu$m is 0.162 to 0.167 dB/km in Examples 5 to 6, and thus can be lowered by the range of 0.001 to 0.006 dB/km from the transmission loss of 0.168 dB with respect to light having a wavelength of 1.55 $\mu$m in Comparative Example 3. When the temperature of heating furnace (surface temperature of inner peripheral face of muffle tube) is 1200°C or higher, as can be seen from the results of experiments, the part of optical fiber attaining a temperature of 1300 to 1700°C after drawing can be heated, so that the cooling rate in this part is lowered, whereby the transmission can be reduced. In particular, as can be seen from Examples 2 and 5, the transmission loss can further be reduced when the temperature of the heating furnace (surface temperature of inner peripheral face of muffle tube) is 1300 to 1500°C.

Next, experiments were carried out while changing drawing rate conditions. Examples 7 and 8 are examples according to the apparatus and method for making an optical fiber in accordance with the above- mentioned first embodiment, whereas Comparative Example 4 is a comparative example carried out for comparison with the examples according to the apparatus and method for making an optical fiber in accordance with the above- mentioned first embodiment.

## Example 7

Using a heating furnace having a muffle tube (with an inner peripheral diameter of about 30 mm) in which L1 = 0.8 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 8 m/s, 0.196 N (20 gf), and 1300°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1550°C in terms of the surface temperature of optical fiber. Hence, in the heating furnace, the part attaining a temperature of 1700 to 1550°C in the drawn optical fiber is assumed to have been cooled at an average annealing rate of about 1200°C/s in a segment of 1.0 m which is the total length of heating furnace.

As for the position of muffle tube, 0.8 < 1.6 (= 8 x 0.2), thereby satisfying the above-mentioned expression (4). As for the total length of muffle tube, 1.0 = 1.0 (= 8/8), thereby satisfying the above-mentioned expression (3). The transmission loss of drawn optical fiber (transmission loss with respect to light.having a wavelength of 1.55 $\mu$m) was measured and found to be 0.167 dB/km.

## Example 8

Using a heating furnace having a muffle tube (with an inner peripheral diameter of about 30 mm) in which L1 = 0.8 m and L2 = 2.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 8 m/s, 0.196 N (20 gf), and 1300°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1700 to 1450°C in the drawn optical fiber is assumed to have been cooled at an average annealing rate of about 1000°C/s in a segment of 2.0 m which is the total length of heating furnace.

As for the position of muffle tube, 0.8 < 1.6 (= 8 x 0.2), thereby satisfying the above-mentioned expression (4) . As for the total length of muffle tube, 2.0 > 1.0 (= 8/8), thereby satisfying the above-mentioned expression (3). The transmission loss of drawn optical fiber (transmission loss with respect to light having a wavelength of 1.55 $\mu$m) was measured and found to be 0.165 dB/km.

## Comparative Example 4

Using a heating furnace having a muffle tube (with an inner peripheral diameter of about 30 mm) in which L1 = 2.0 m and L2 = 1.0 m, an optical fiber was drawn. The optical fiber preform to be drawn had a core portion made of pure silica glass and a cladding portion made of fluorine-doped glass. The drawing rate, the drawing tension, and the temperature of heating furnace (temperature at the furnace center) were set to 8 m/s, 0.196 N (20 gf), and 1300°C, respectively. In this case, the temperature of the optical fiber immediately before entering the heating furnace (entering temperature) was 1000°C in terms of the surface temperature of optical fiber.

As for the position of muffle tube, 2.0 > 1.6 (= 8 x 0.2), thereby failing to satisfy the above-mentioned expression (4). As for the total length of muffle tube, 1.0 = 1.0 (= 8/8), thereby satisfying the above-mentioned expression (3). The transmission loss of drawn optical fiber (transmission loss with respect to light having a wavelength of 1.55 $\mu$m) was measured and found to be 0.168 dB/km as with the transmission loss in Comparative Example 1 in which the heating furnace was removed.

As in the foregoing, it has been verified that the transmission loss with respect to light having a wavelength of 1.55 $\mu$m is 0.165 to 0.167 dB/km in Examples 7 and 8, and thus can be lowered by the range of 0.001 to 0.003 dB/km from the transmission loss of 0.168 dB with respect to light having a wavelength of 1.55 $\mu$m in Comparative Example 4. If L1 as the position of muffle tube of heating furnace is 2.0 m when the drawing rate is 8 m/s, it will be harder to heat the part of optical fiber attaining a temperature of 1200 to 1700°C after drawing, so that the cooling rate in this part cannot be lowered, whereby the transmission loss will increase. Also, even when the muffle tube of heating furnace is disposed at a position satisfying expression (4), if the total length of muffle tube is shorter than 1.0 m, it will be harder to heat the part of drawn optical fiber attaining a temperature of 1200 to 1700°C, so that the cooling rate in this part cannot be lowered, whereby the transmission loss will increase.

As can be seen from the results of experiments mentioned above, since the heating furnace 21 in which the optical fiber 3 drawn upon heating by the drawing furnace 11 before being coated with the UV resin 52 is heated at a temperature of 1200 to 1700°C is disposed between the drawing furnace 11 and resin curing section 31 (coating die 51) in the apparatus and method for making an optical fiber in accordance with the first embodiment, cooling rate is lowered in a predetermined segment in the part attaining a temperature ranging from 1200 to 1700°C in the above-mentioned optical fiber 3, so that the fictive temperature of optical fiber 3 decreases, thus lowering the disorder in atomic arrangement, whereby it becomes possible to make the optical fiber 3 having decreased its transmission loss by reducing its Rayleigh scattering intensity during the period from the drawing upon heating to the coating with the UV resin 52. Also, since the Rayleigh scattering intensity is reduced by controlling the cooling rate of optical fiber 3 after drawing before being coated with the UV resin 52, the heat treatment for reheating such as that in the above-mentioned prior art is unnecessary, whereby the apparatus is quite easily applicable to the mass production of the coated optical fiber 4 whose surface is coated with the UV resin 52 cured thereon.

When the optical fiber 3 drawn upon heating by the drawing furnace 11 before being coated with the UV resin 52 is heated at a temperature of 1300 to 1600°C in the heating furnace 21, the cooling rate of optical fiber 3 decreases at a predetermined segment in the part of optical fiber 3 attaining a temperature of 1200 to 1700°C, so that the optical fiber 3 lowers its fictive temperature, whereby its Rayleigh scattering intensity can further be reduced.

When the position of muffle tube 23 of heating furnace 21 is located at a position satisfying the above-mentioned expression (4), a predetermined segment in the part attaining a temperature of 1200 to 1700°C in the optical fiber 3 after being drawn upon heating in the drawing furnace 11 before being coated with the UV resin 52 can be heated securely, whereby the cooling rate in this part can be lowered appropriately.

When the position of muffle tube 23 of heating furnace 21 is located at a position where the temperature (entering temperature) of optical fiber immediately before entering the muffle tube 23 ranges from 1400 to 1800°C, a predetermined segment in the part attaining a temperature of 1200 to 1700°C in the optical fiber 3 after being drawn upon heating in the drawing furnace 11 before being coated with the UV resin 52 can be heated securely, whereby the cooling rate in this part can be lowered appropriately.

When the total length of muffle tube 23 of heating furnace 21 satisfies the above-mentioned expression (3), a predetermined segment in the part attaining a temperature of 1200 to 1700°C in the optical fiber 3 after being drawn upon heating in the drawing furnace 11 before being coated with the UV resin 52 can be heated securely, whereby the cooling rate in this part can be lowered appropriately.

Since an $N_2$ gas atmosphere is attained within the muffle tube 23 of heating furnace 21, the cooling rate within the heating furnace 21 (muffle tube 23) can be lowered, whereby the optical fiber 3 can further lower its transmission loss. When an He gas atmosphere is attained within the muffle tube 13 of drawing furnace 11, on the other hand, the cooling rate of optical fiber 3 within the drawing furnace (muffle tube 13) becomes about 30000°C/s. In this case, since air-cooling is carried out between the drawing furnace 11 and heating furnace 21, the cooling rate of optical fiber 3 becomes 4000 to 5000°C/s, so that the optical fiber preform 2 is softened upon heating and is rapidly cooled until it tapers down to a predetermined diameter, whereby the optical fiber 3 can be restrained from fluctuating its outside diameter. When the He gas atmosphere is attained within the muffle tube 13 of drawing furnace 11 while air-cooling is carried out between the drawing furnace 11 and heating furnace 21, the part of optical fiber 3 yielding a temperature higher than 1700°C before entering the heating furnace 21 is cooled at a cooling rate of 4000°C/s or higher, whereby the height of equipment needed for cooling the optical fiber 3 can be reduced. At a temperature higher than 1700°C, the fictive temperature will be lower than 1700°C even when rapidly cooled at a rate of about 30000°C/s, for example, thus exerting no influences on Rayleigh scattering.

Since the outside diameter meter 41 for measuring the outside diameter of optical fiber 3 having exited from the heating furnace 21 and the control unit 44 for controlling the rotating speed of drum 42 (driving motor 43) according to the output signal from the outside diameter meter 41 such that the outside diameter of optical fiber 3 attains a predetermined value are provided, the outside diameter of the optical fiber 3 having exited from the heating furnace 21 with an outside diameter length in a stable state is measured, and the rotating speed of the drum 42 (driving motor 43) is controlled according to this stable outside diameter, whereby the drawing rate of optical fiber 3 can be controlled appropriately.

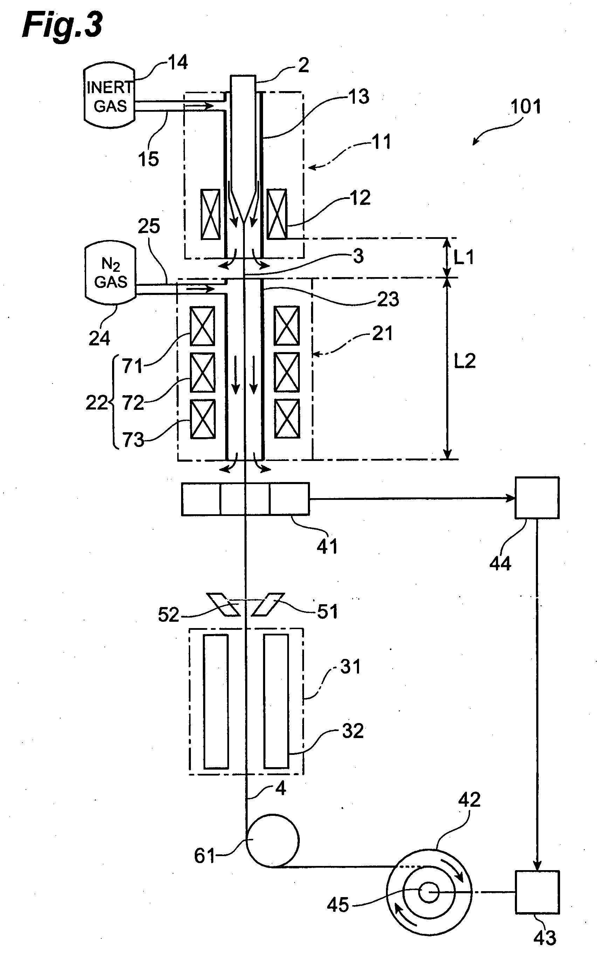

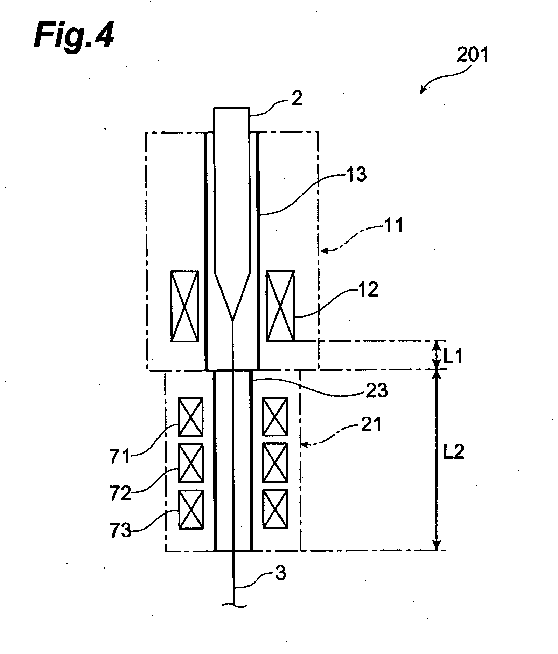

Next, with reference to Figs. 3 and 4, a modified example of the above-mentioned first embodiment will be explained. As shown in Fig. 3, in a drawing apparatus 101 for a silica type optical fiber, the heater 22 of heating furnace 21 includes a first heater 71, a second heater 72, and a third heater 73. The heaters 71, 72, 73 are successively disposed in this order in the direction of drawing the optical fiber preform 2 (from the upper side to lower side in Fig. 2). The respective temperatures of heaters 71, 72, 73 are regulated so as to satisfy:

$$T1 = T2 + 25°C \qquad (5)$$

$$T3 = T2 - 25°C \qquad (6)$$

where

T1 is the surface temperature of inner peripheral face of muffle tube 23 at a position corresponding to the first heater 71;
T2 is the surface temperature of inner peripheral face of muffle tube 23 at a position corresponding to the second heater 72; and
T3 is the surface temperature of inner peripheral face of muffle tube 23 at a position corresponding to the third heater 73. Here, the difference between T1 and T2 or the difference between T2 and T3 is not limited to 25°C mentioned above, and the temperature difference may be about 30°C, for example.

Thus, a temperature gradient yielding higher and lower temperatures on the drawing furnace 11 side and the resin coating section 31 (coating die 51) side, respectively, is provided within the muffle tube 23 of heating furnace 21 when the first heater 71, second heater 72, and third heater 73 are provided. The optical fiber 3 drawn upon heating in the drawing furnace 11 has such a temperature distribution that its temperature lowers from the drawing furnace 11 side to the resin coating section 31 (coating die 51) side. Hence, when the first heater 71, second heater 72, and third heater 73 having regulated their temperatures are disposed as mentioned above, the heating furnace 21 is provided with such a temperature gradient that higher and lower temperatures are attained on the drawing furnace 11 side and the resin coating section 31 (coating die 51) side, respectively, so that the muffle tube 23 has a temperature distribution corresponding to the temperature of optical fiber 3 therewithin and appropriately keeps its temperature difference from the optical fiber 3, whereby the optical fiber 3 can be cooled at a further appropriate cooling rate.

As another modified example, the heating furnace 21 may be provided integrally with the drawing furnace 11 so as to be continuous therewith as in the drawing apparatus 201 shown in Fig. 4. When the heating furnace 21 is thus provided integrally with the drawing furnace 11 so as to be continuous therewith, the cooling rate decreases in a predetermined segment in the part yielding a temperature of 1200 to 1700°C in the optical fiber 3 after drawing upon heating in the drawing furnace 11 before being coated with the UV resin 52, so that the optical fiber 3 lowers its fictive temperature, and the disorder in atomic arrangement is reduced, whereby it is possible to make the optical fiber 3 having lowered its transmission loss by reducing the Rayleigh scattering intensity within a very short period from the drawing upon heating to the coating with the UV resin 52.

**Second Embodiment**

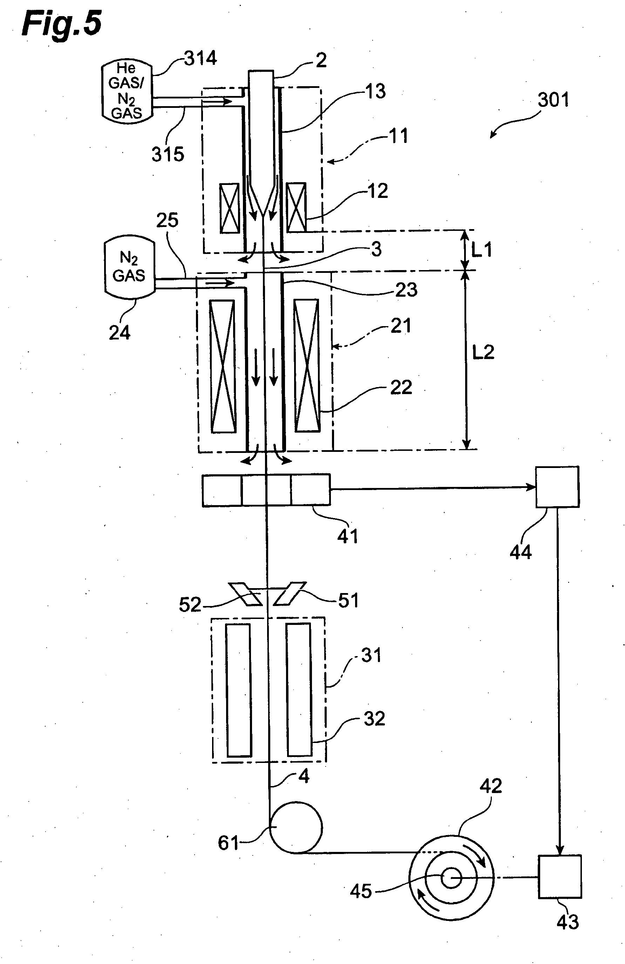

Next, with reference to Fig. 5, a second embodiment of the apparatus and method for making an optical fiber in accordance with the present invention will be explained.

A drawing apparatus 301 is a drawing apparatus for a silica type optical fiber; and comprises a drawing furnace 11, a heating furnace 21 for annealing, and a resin curing section 31, which are disposed in this order in the direction of drawing an optical fiber preform 2 (from the upper side to the lower side in Fig. 5). The optical fiber preform 2 held by a preform supplying apparatus (not depicted) is supplied to the drawing furnace 11, and the lower end of the optical fiber preform 2 is heated and softened by a heater 12 within the drawing furnace 11, so as to draw an optical fiber 3. He gas/$N_2$ gas supply passage 315 for selectively supplying He gas or $N_2$ gas from He gas/$N_2$ gas supply section 314 is connected to a muffle tube 13 of the drawing furnace 11, so that an He gas atmosphere or $N_2$ gas atmosphere is attained within the muffle tube 13 of drawing furnace 11. The optical fiber 3 drawn upon heating is rapidly cooled to about 1700°C within the muffle tube 13. Thereafter, the optical fiber 3 is taken out of the drawing furnace 11 from the lower part of the muffle tube 13, and is cooled with air between the drawing furnace 11 and the heating furnace 21. He gas has a thermal conductivity coefficient $\lambda$ (T=300K) of 150 mW/(m·K), $N_2$ gas has a thermal conductivity coefficient $\lambda$ (T = 300 K) of 26 mW/(m · K), and air has a thermal conductivity coefficient $\lambda$ (T = 300 K) of 26 mW/(m·K).

The air-cooled optical fiber 3 is sent to the heating furnace 21, so that a predetermined segment of optical fiber 3 is heated and then is annealed at a predetermined cooling rate. The annealing in the heating furnace 21 is carried out by cooling at a cooling rate of 1000°C/s or less the segment where the optical fiber 3 yields a temperature difference of at least 50°C in the part attaining a temperature of 1300 to 1700°C in the optical fiber 3 drawn upon heating. In particular, it is preferred that the segment where the optical fiber 3 yields a temperature difference of at least 50°C in the part attaining a temperature of 1400 to 1600°C in the optical fiber 3 drawn upon heating be cooled at a cooling rate of 1000°C/s or less. Therefore, the installing positions of the heater 22 and muffle tube 23 of heating furnace 21 and the total length thereof in the drawing direction of optical fiber preform 2 (the vertical direction in Fig. 5) are set in view of the drawing rate. Here, the drawing rate is needed to be taken into consideration, since the position at which the optical fiber 3 attains a given temperature descends as the drawing rate increases. Also, the temperature of heater 22 of heating furnace 21 is set such that the segment where the optical fiber 3 located within the muffle tube 23 attains a temperature difference of at least 50°C is cooled at a cooling rate of 1000°C/s or less.

Connected to the muffle tube 23 of heating furnace 21 is an $N_2$ gas supply passage 25 from an $N_2$ gas supply section 24, so that the muffle tube 23 of heating furnace 21 attains an $N_2$ gas atmosphere therewithin. $N_2$ gas has a thermal conductivity lower than that of He gas, thereby acting to lower the cooling rate of optical fiber. In place of $N_2$ gas, gases having a relatively large molecular weight such as air and Ar, and the like can be used as well. When a carbon heater is employed, it is necessary to use an inert gas as a matter of course.

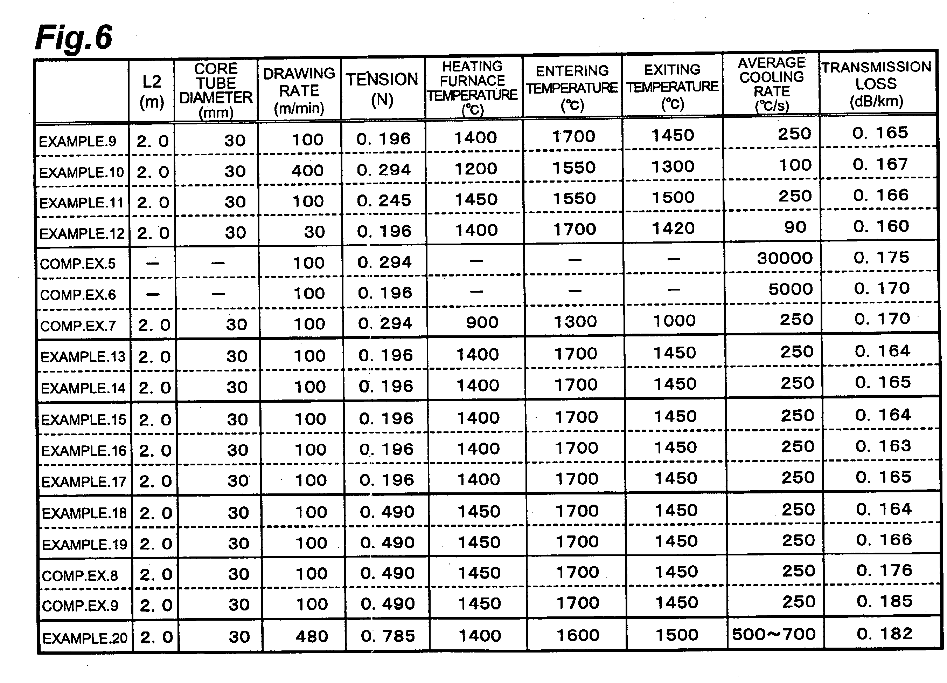

Next, with reference to Fig. 6, results of experiments according to the apparatus and method for making an optical fiber in accordance with the second embodiment using the above- mentioned drawing apparatus 301 will be explained. The conditions common in these experiments are as follows. As the optical fiber preform 2, one having an outside diameter of 35 mm was used, and an optical fiber 3 having an outside diameter of 125 $\mu$m was drawn from the optical fiber preform 2. The temperature of drawing furnace was about 2000°C (though slightly changed according to the drawing tension) at the surface of the inner periphery of the muffle tube. In the following experimental examples (Examples 9 to 24), the surface temperature of optical fiber 3 is taken as the temperature of optical fiber 3. The difference between the surface temperature of optical fiber 3 and the temperature within the optical fiber 3 is on the order of 20 to 100°C. The surface temperatures of the inner peripheral faces (surfaces opposing the surfaces of optical fiber preform 2 and optical fiber 3) of muffle tubes 13, 23 are taken as the temperatures of drawing furnace 11 and heating furnace 21, respectively.

Examples 9 to 12 are examples according to the apparatus and method for making an optical fiber in accordance with the above-mentioned second embodiment, whereas Comparative Examples 5 to 7 are comparative examples carried out for comparison with the examples according to the apparatus and method for making an optical fiber in accordance with the above-mentioned second embodiment.

**Example 9**

Using a heating furnace having a muffle tube with a total length (L2) of 2 m in the drawing direction of optical fiber preform (and an inner peripheral diameter of about 30mm), an optical fiber was drawn. Supplied into the drawing furnace (muffle tube) was $N_2$ gas. The optical fiber preform to be drawn had a core portion made of pure silica glass and a cladding portion made of fluorine-doped glass. The drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.165 dB/km. The Rayleigh scattering coefficient determined from the measured data of wavelength characteristic of transmission loss was 0.825 dB$\mu$m$^4$/km.

**Example 10**

Using a heating furnace having a muffle tube with a total length (L2) of 2 m in the drawing direction of optical fiber preform (and an inner peripheral diameter of about 30 mm), an optical fiber was drawn. Supplied into the drawing furnace (muffle tube) was He gas. The optical fiber preform to be drawn had a core portion made of pure silica glass and a cladding portion made of fluorine-doped glass. The drawing rate, the drawing tension, and the temperature of heating furnace (surface temperature at the inner peripheral face of muffle tube) were set to 400 m/min, 0.294 N (30 gf), and 1200°C, respectively. In this case, the temperature of the optical fiber immediately before entering the heating furnace (entering temperature) was 1550°C in terms of the surface temperature of optical fiber, whereas the temperature of the optical fiber immediately after exiting from the heating furnace was 1300°C in terms of the surface temperature of optical fiber. Hence, in the heating furnace, the part attaining a temperature of 1300 to 1550°C in the drawn optical fiber is assumed to have been cooled at an average cooling rate of about 1000°C/s in a segment of 2 m which is the total length of heating furnace.

The transmission loss (transmission loss with respect to light having a wavelength of 1. 55 $\mu$m) of the drawn optical fiber was measured and found to be 0.167 dB/km. The Rayleigh scattering coefficient determined from the measured data of wavelength characteristic of transmission loss was 0.838 dB$\mu$m$^4$/km.

**Example 11**

Using a heating furnace having a muffle tube with a total length (L2) of 0.5 m in the drawing direction of optical fiber preform (and an inner peripheral diameter of about 30 mm), an optical fiber was drawn. Supplied into the drawing furnace (muffle tube) was $N_2$ gas. The optical fiber preform to be drawn had a core portion made of pure silica glass and a cladding portion made of fluorine-doped glass. The drawing rate, the drawing tension, and the temperature of heating furnace (surface temperature at the inner peripheral face of muffle tube) were set to 100 m/min, 0.245 N (25 gf), and 1450°C, respectively. In this case, the temperature of the optical fiber immediately before entering the heating furnace (entering temperature) was 1550°C in terms of the surface temperature of optical fiber, whereas the temperature of the optical fiber immediately after exiting from the heating furnace was 1500°C in terms of the surface temperature of optical fiber. Hence, in the heating furnace, the part attaining a temperature of 1500 to 1550°C in the drawn optical fiber is assumed to have been cooled at an average cooling rate of about 250°C/s in a segment of 0.5 m which is the total length of heating furnace.

The transmission loss (transmission loss with respect to light having a wavelength of 1.55 $\mu$m) of the drawn optical fiber was measured and found to be 0.166 dB/km. The Rayleigh scattering coefficient determined from the measured data of wavelength characteristic of transmission loss was 0.838 dB$\mu$m$^4$/km.

**Example 12**

Using a heating furnace having a muffle tube with a total length (L2) of 2 m in the drawing direction of optical fiber preform (and an inner peripheral diameter of about 30 mm), an optical fiber was drawn. Supplied into the drawing furnace (muffle tube) was $N_2$ gas. The optical fiber preform to be drawn had a core portion made of pure silica glass and a cladding portion made of fluorine-doped glass. The drawing rate, the drawing tension, and the temperature of heating furnace (surface temperature at the inner peripheral face of muffle tube) were set to 30 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1420°C in terms of the surface temperature of optical fiber. Hence, in the heating furnace, the part attaining a temperature of 1420 to 1700°C in the drawn optical fiber is assumed to have been cooled at an average cooling rate of about 90°C/s in a segment of 2 m which is the total length of heating furnace.

The transmission loss (transmission loss with respect to light having a wavelength of 1.55 $\mu$m) of the drawn optical fiber was measured and found to be 0.160 dB/km. The Rayleigh scattering coefficient determined from the measured data of wavelength characteristic of transmission loss was 0.805 dB$\mu$m$^4$/km.

**Comparative Example 5**

An optical fiber was drawn in a state where the heating furnace was removed. Supplied into the drawing furnace (muffle tube) was He gas. The optical fiber preform to be drawn had a core portion made of pure silica glass and a cladding portion made of fluorine-doped glass. The drawing rate and the drawing tension were set to 100 m/min and 0.294 N (30 gf), respectively. In this case, the part attaining a temperature of 1300 to 1700°C in the optical fiber was cooled at an average cooling rate of about 30000°C/s.

The transmission loss (transmission loss with respect to light having a wavelength of 1.55 $\mu$m) of the drawn optical fiber was measured and found to be 0.175 dB/km. The Rayleigh scattering coefficient determined from the measured data of wavelength characteristic of transmission loss was 0.88 dB$\mu$m$^4$/km.

**Comparative Example 6**

An optical fiber was drawn in a state where the heating furnace was removed. Supplied into the drawing furnace (muffle tube) was He gas. The optical fiber preform to be drawn had a core portion made of pure silica glass and a cladding portion made of fluorine-doped glass. The drawing rate and the drawing tension were set to 100 m/min and 0.196 N (20 gf), respectively. In this case, the part attaining a temperature of 1300 to 1700°C in the optical fiber was cooled at an average cooling rate of about 5000°C/s.

The transmission loss (transmission loss with respect to light having a wavelength of 1.55 $\mu$m) of the drawn optical fiber was measured and found to be 0.170 dB/km. The Rayleigh scattering coefficient determined from the measured data of wavelength characteristic of transmission loss was 0.85 dB$\mu$m$^4$/km.

**Comparative Example 7**

Using a heating furnace having a muffle tube with a total length (L2) of 2 m in the drawing direction of optical fiber preform (and an inner peripheral diameter of about 30mm), an optical fiber was drawn. Supplied into the drawing furnace (muffle tube) was $N_2$ gas. The optical fiber preform to be drawn had a core portion made of pure silica glass and a cladding portion made of fluorine-doped glass. The drawing rate, the drawing tension, and the temperature of heating furnace (surface temperature at the inner peripheral face of muffle tube) were set to 100 m/min, 0.294 N (30 gf), and 900°C, respectively. In this case, the temperature of the optical fiber immediately before entering the heating furnace (entering temperature) was 1300°C in terms of the surface temperature of optical fiber, whereas the temperature of the optical fiber immediately after exiting from the heating furnace was 1000°C in terms of the surface temperature of optical fiber. Hence, in the heating furnace, the part attaining a temperature of 1000 to 1300°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.170 dB/km. The Rayleigh scattering coefficient determined from the measured data of wavelength characteristic of transmission loss was 0.85 dB$\mu$m$^4$/km.

As in the foregoing, Examples 9 to 12 exhibited a Rayleigh scattering coefficient of 0.805 to 0.838 dB$\mu$m$^4$/km and a transmission loss of 0.160 to 0.167 dB/km with respect to light having a wavelength of 1.55 $\mu$m, thus being able to lower the Rayleigh scattering coefficient and reduce the transmission loss as compared with Comparative Examples 5 to 7 yielding a Rayleigh scattering coefficient of 0.85 to 0.88 dB$\mu$m$^4$/km and a transmission loss of 0.170 to 0.175 dB/km with respect to light having a wavelength of 1.55 $\mu$m.

Next, experiments were carried out under the experimental conditions of Example 9 mentioned above while changing the concentration of hydroxyl group contained in the core portion of optical fiber preform. Examples 13 and 14 are examples of the apparatus and method for making an optical fiber in accordance with the above- mentioned second embodiment.

**Example 13**

The core portion of the optical fiber preform to be drawn was caused to contain hydroxyl group such that the transmission loss by hydroxyl group absorption at a wavelength of 1.38 $\mu$m became 0.02 dB/km. Supplied into the drawing furnace (muffle tube) was $N_2$ gas. A heating furnace having a muffle tube with a total length (L2) of 2 m (and an inner peripheral diameter of about 30 mm) was used, whereas the drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.164 dB/km. The Rayleigh scattering coefficient determined from the measured data of wavelength characteristic of transmission loss was 0.82 dB$\mu$m$^4$/km.

**Example 14**

The core portion of the optical fiber preform to be drawn was caused to contain hydroxyl group such that the transmission loss by hydroxyl group absorption at a wavelength of 1.38 $\mu$m became 0.5 dB/km. Supplied into the drawing furnace (muffle tube) was $N_2$ gas. A heating furnace having a muffle tube with a total length (L2) of 2 m (and an inner peripheral diameter of about 30 mm) was used, whereas the drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.165 dB/km. The Rayleigh scattering coefficient determined from the measured data of wavelength characteristic of transmission loss was 0.815 dB$\mu$m$^4$/km.

As in the foregoing, Examples 13 and 14 exhibited a Rayleigh scattering coefficient of 0.815 to 0.82 dB$\mu$m$^4$/km and a transmission loss of 0.164 to 0.165 dB/km with respect to light having a wavelength of 1.55 $\mu$m, thus being able to lower the Rayleigh scattering coefficient and reduce the transmission loss as compared with Example 9 yielding a Rayleigh scattering coefficient of 0.825 dB$\mu$m$^4$/km and a transmission loss of 0.165 dB/km with respect to light having a wavelength of 1.55 $\mu$m. Though Example 14, in which hydroxyl group is contained in the core portion of the optical fiber preform to be drawn such that the transmission loss caused by hydroxyl group absorption at a wavelength of 1.38 $\mu$m is 0.5 dB/km, yields a Rayleigh scattering coefficient lower than that in Example 9, the transmission loss caused by hydroxyl group absorption therein is at a level which cannot be neglected, thus canceling out the effect of lowering the Rayleigh scattering coefficient, whereby transmission loss will be enhanced if hydroxyl group is contained more.

Next, experiments were carried out under the experimental conditions of Example 9 mentioned above while changing the concentration of Cl contained in the core portion of optical fiber preform. Examples 15 to 17 are examples of the apparatus and method for making an optical fiber in accordance with the above-mentioned second embodiment.

**Example 15**

The core portion of the optical fiber preform to be drawn was caused to contain Cl such that the relative refractive index difference with respect to pure silica glass became 0.0001. Supplied into the drawing furnace (muffle tube) was N$_2$ gas. A heating furnace having a muffle tube with a total length (L2) of 2 m (and an inner peripheral diameter of about 30 mm) was used, whereas the drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.164 dB/km. The Rayleigh scattering coefficient determined from the measured data of wavelength characteristic of transmission loss was 0.82 dB$\mu$m$^4$/km.

**Example 16**

The core portion of the optical fiber preform to be drawn was caused to contain Cl such that the relative refractive index difference with respect to pure silica glass became 0.0005. Supplied into the drawing furnace (muffle tube) was N$_2$ gas. A heating furnace having a muffle tube with a total length (L2) of 2 m (and an inner peripheral diameter of about 30 mm) was used, whereas the drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.163 dB/km. The Rayleigh scattering coefficient determined from the measured data of wavelength characteristic of transmission loss was 0.815 dB$\mu$m$^4$/km.

**Example 17**

The core portion of the optical fiber preform to be drawn was caused to contain Cl such that the relative refractive index difference with respect to pure silica glass became 0.001. Supplied into the drawing furnace (muffle tube) was N$_2$ gas. A heating furnace having a muffle tube with a total length (L2) of 2 m (and an inner peripheral diameter of about 30 mm) was used, whereas the drawing rate, the drawing tension, and the temperature of heating furnace (surface temperature at the inner peripheral face of muffle tube) were set to 100 m/min, 0.196 N (20 gf), and 1400°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.165 dB/km. The Rayleigh  scattering coefficient determined from the measured data of wavelength characteristic of transmission loss was 0.825 dB$\mu$m$^4$/km.

As in the foregoing, Examples 15 to 17 exhibited a Rayleigh scattering coefficient of 0.815 to 0.825 dB$\mu$m$^4$/km and a transmission loss of 0.163 to 0.165 dB/km with respect to light having a wavelength of 1.55 $\mu$m, thus being able to lower the Rayleigh scattering coefficient and reduce the transmission loss as compared with Example 9 yielding a Rayleigh scattering coefficient of 0.825 dB$\mu$m$^4$/km and a transmission loss of 0.165 dB/km with respect to light having a wavelength of 1.55 $\mu$m. Example 17, in which the core portion of the optical fiber preform to be drawn is caused to contain Cl such that the relative refractive index difference with respect to pure silica glass becomes 0.001, yields the results identical to those of Example 9, so that the decrease in Rayleigh scattering intensity caused by the drop in fictive temperature due to Cl contained therein and the increase in Rayleigh scattering intensity caused by Cl itself cancel out each other, whereby transmission loss will increase if Cl is contained more.

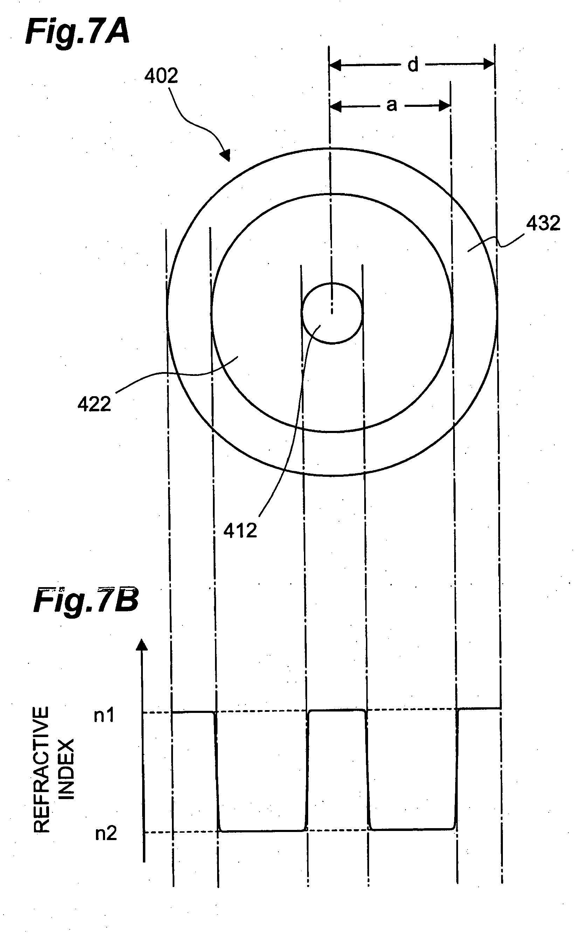

Next, experiments were carried out with a higher drawing tension while the configuration of cladding portion of optical fiber preform was changed. Examples 18 and 19 are examples according to the apparatus and method for making an optical fiber in accordance with the above- mentioned  second embodiment, whereas Comparative Examples 8 to 9 are comparative examples carried out for comparison with the examples according to the apparatus and method for making an optical fiber in accordance with the above- mentioned second embodiment. As shown in Figs. 7A and 7B, the optical fiber preform 402 used in the following experiments is constituted by a core portion 412 made of pure silica glass (refractive index n1), a first cladding portion 422 made of fluorine- doped glass (refractive index n2), and a second cladding portion 432 made of pure silica glass (refractive index n1) . The first cladding portion 422 has a region extending from the outer periphery of core portion 412 to a radius a, thus yielding an outside diameter 2a. The second cladding region 432 has a region extending from the outer periphery of first cladding portion 422 to a radius d (outer periphery), thus yielding an outside diameter 2d. Employed in the experiments is the optical fiber 402 in which 2d = 35mm. As the second cladding portion 432, highlypure silica glass may be used in place of pure silica glass.

## Example 18

The optical fiber preform to be drawn had a core portion made of pure silica glass, and a cladding portion in which the part extending from the center of optical fiber preform up to a = 12.25 mm (a/d = 0.7) was made of fluorine- doped glass whereas the part extending by a = 12.25 mm (a/d = 0.7) or greater was made of pure silica glass. Supplied into the  drawing furnace (muffle tube) was N$_2$ gas. A heating furnace having a muffle tube with a total length (L2) of 2 m (and an inner peripheral diameter of about 30 mm) was used for drawing an optical fiber. The drawing rate, the drawing tension, and the temperature of heating furnace (surface temperature at the inner peripheral face of muffle tube) were set to 100m/min, 0.490N (50 gf), and 1450°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.164 dB/km. The Rayleigh scattering coefficient determined from the measured data of wavelength characteristic of transmission loss was 0.825 dB$\mu$m$^4$/km.

## Example 19

The optical fiber preform to be drawn had a core portion  made of pure silica glass, and a cladding portion in which the part extending from the center of optical fiber preform up to a = 15.75 mm (a/d = 0.9) was made of fluorine- doped glass whereas the part extending by a = 15.75 mm (a/d = 0.9) or greater was made of pure silica glass. Supplied into the drawing furnace (muffle tube) was N$_2$ gas. A heating furnace having a muffle tube with a total length (L2) of 2 m (and an inner peripheral diameter of about 30 mm) was used for drawing an optical fiber. The drawing rate, the drawing tension, and the temperature of heating furnace (surface temperature at the inner peripheral face of muffle tube) were set to 100m/min, 0.490N (50 gf), and 1450°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn

optical fiber was measured and found to be 0.166 dB/km. The Rayleigh scattering coefficient determined from the measured data of wavelength characteristic of transmission loss was 0.835 dB$\mu$m$^4$/km.

**Comparative Example 8**

The optical fiber preform to be drawn had a core portion made of pure silica glass, and a cladding portion in which the part extending from the center of optical fiber preform up to a = 16.625 mm (a/d = 0.95) was made of fluorine-doped glass whereas the part extending by a = 16.625 mm (a/d = 0.95) or greater was made of pure silica glass. Supplied into the drawing furnace (muffle tube) was N$_2$ gas. A heating furnace having a muffle tube with a total length (L2) of 2 m (and an inner peripheral diameter of about 30 mm) was used for drawing an optical fiber. The drawing rate, the drawing tension, and the temperature of heating furnace (surface temperature at the inner peripheral face of muffle tube) were set to 100 m/min, 0.490 N (50 gf), and 1450°C, respectively. In this case, the temperature of the optical fiber immediately before entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.176 dB/km. The Rayleigh scattering coefficient determined from the measured data of wavelength characteristic of transmission loss was 0.89 dB$\mu$m$^4$/km.

**Comparative Example 9**

The optical fiber preform to be drawn had a core portion made of pure silica glass, and a cladding portion in which the whole area (a = d) was made of fluorine-doped glass. A heating furnace having a muffle tube with a total length (L2) of 2 m (and an inner peripheral diameter of about 30 mm) was used for drawing an optical fiber. Supplied into the drawing furnace (muffle tube) was N$_2$ gas. The drawing rate, the drawing tension, and the temperature of heating furnace (surface temperature at the inner peripheral face of muffle tube) were set to 100 m/min, 0.490 N (50 gf), and 1450°C, respectively. In this case, the temperature of the optical fiber immediatelybefore entering the heating furnace (entering temperature) was 1700°C in terms of the surface temperature of optical fiber, whereas the temperature of the optical fiber immediately after exiting from the heating furnace was 1450°C in terms of the surface temperature of optical fiber. Hence, in the heating furnace, the part attaining a temperature of 1450 to 1700°C in the drawn optical fiber is assumed to have been cooled at an average cooling rate of about 250°C/s in a segment of 2 m which is the total length of heating furnace.

The transmission loss (transmission loss with respect to light having a wavelength of 1.55 $\mu$m) of the drawn optical fiber was measured and found to be 0.185 dB/km. The Rayleigh scattering coefficient determined from the measured data of wavelength characteristic of transmission loss was 0.94 dB$\mu$m$^4$/km.

As in the foregoing, Examples 18 and 19 exhibited a Rayleigh scattering coefficient of 0.825 to 0.835 dB$\mu$m$^4$/km and a transmission loss of 0.164 to 0.166 dB/km with respect to light having a wavelength of 1.55 $\mu$m as with Examples 9 to 12, thus being able to lower the Rayleigh scattering coefficient and reduce the transmission loss as compared with Comparative Examples 8 and 9 yielding a Rayleigh scattering coefficient of 0.89 to 0.94 dB$\mu$m$^4$/km and a transmission loss of 0.176 to 0.185 dB/km with respect to light having a wavelength of 1.55 $\mu$m

Next, an experiment was carried out while changing the optical fiber preform. Example 20 is an example according to the apparatus and method for making an optical fiber in accordance with the above- mentioned first and second embodiments. The optical fiber preform employed in the following experiment has a core portion made of Ge-doped silica glass, and a cladding portion made of silica glass.

**Example 20**

Using a heating furnace having a muffle tube (with an inner peripheral diameter of about 30 mm) in which the distance (L1) from the lower end of drawing furnace to the upper end of muffle tube of heating furnace was 0.4 m and the total length (L2) of muffle tube of heating furnace was 2.0 m, an optical fiber was drawn. The gap between the drawing furnace and the heating furnace was set to 0.05 mm. The optical fiber preform to be drawn had a core portion made of Ge-doped silica glass, and a cladding region made of silica glass. The relative refractive index difference $\Delta$n between the core portion and cladding portion was 0.36%. The drawing rate, the drawing tension, and the temperature of heating furnace (surface temperature at the inner peripheral face of muffle tube) were set to 8 m/s (480 m/min), 0.785 N (80 gf), and 1400°C, respectively. In this case, the temperature of the optical fiber immediately before entering the heating furnace (entering temperature) was about 1500°C in terms of the surface temperature of optical fiber, whereas the temperature of the optical fiber immediately after exiting from the heating furnace was 1500°C in terms of the surface temperature of optical fiber. Hence, in the heating furnace, the part attaining a temperature of 1500 to 1600°C in the drawn optical fiber is assumed to have been cooled at an annealing rate of 500 to 700°C/s in a segment of 2.0 m which is the total length of heating furnace.

The transmission loss (transmission loss with respect to light having a wavelength of 1.55 $\mu$m) of the drawn optical fiber was measured and found to be 0.182 dB/km. The Rayleigh scattering coefficient determined from the measured data of wavelength characteristic of transmission loss was 0.92 dB$\mu$m$^4$/km, thus being able to fully reduce the transmission loss as a Ge-doped single-mode optical fiber. The output diameter of drawn optical fiber was 125±0.1 $\mu$m.

Thus, as can be seen from the results of experiments mentioned above, the cooling rate is set to 1000°C/s or less in the segment where the optical fiber 3 attains a temperature difference of at least 50°C in the part of optical fiber 3 yielding a temperature of 1300 to 1700°C after being drawn upon heating in the drawing furnace before being coated with the UV resin 52 in the apparatus and method of making an optical fiber in accordance with the second embodiment, so that the optical fiber 3 lowers its fictive temperature, and the disorder in atomic arrangement is reduced, whereby it is possible to make an optical fiber having lowered its transmission loss by reducing the Rayleigh scattering intensity within a very short period from the drawing upon heating to the coating with the UV resin 52. Also, since the Rayleigh scattering intensity is reduced by controlling the cooling rate of optical fiber 3 after drawing before being coated with the UV resin 52, the heat treatment for reheating such as that in the above- mentioned prior art is unnecessary, whereby the apparatus is quite easily applicable to the mass production of the coated optical fiber 4 whose surface is coated with the UV resin 52 cured thereon.

When an optical fiber preform having a core portion yielding a relative refractive index difference of 0.001 or less with respect to pure silica glass in a state containing a dopant is employed as an optical fiber preform 2, the optical fiber 3 further lowers its fictive temperature, whereby the Rayleigh scattering intensity can further be reduced.

When an optical fiber preform whose core portion is caused to contain hydroxyl group such that the transmission loss caused by hydroxyl group absorption at a wavelength of 1.38 $\mu$m becomes 0.02 to 0.5 dB/km, the optical fiber 3 further lowers its fictive temperature, whereby the Rayleigh scattering intensity can further be reduced. When hydroxyl group is contained such that the transmission loss caused by hydroxyl group absorption at a wavelength of 1.38 $\mu$m becomes at least 0.02 dB/km, the optical fiber 3 further lowers its fictive temperature, whereby the Rayleigh scattering intensity can further be reduced. If hydroxyl group is contained such that the transmission loss caused by hydroxyl group absorption at a wavelength of 1.38 $\mu$m is greater than 0.5 dB/km, loss will increase due to the absorption by hydroxyl group, thus canceling out the effect of lowering Rayleigh scattering intensity caused by the addition of hydroxyl group, whereby transmission loss will increase.

When an optical fiber preform whose core portion is caused to contain Cl so as to yield a relative refractive index difference of 0.0001 to 0.001 with respect to pure silica glass is employed as the optical fiber preform 2, the optical fiber 3 further lowers its fictive temperature, whereby the Rayleigh scattering intensity can further be reduced. When Cl is contained such that the relative refractive index difference with respect to pure silica glass is at least 0.0001, the optical fiber 3 further lowers its fictive temperature, whereby the Rayleigh scattering intensity can further be reduced. If Cl is contained such that the relative refractive index difference becomes greater than 0.001, the Rayleigh scattering intensity is enhanced by Cl itself, so that the effect of lowering Rayleigh scattering intensity caused by the addition of Cl is canceled out, whereby transmission loss will increase.

Using the optical fiber preform 402 having the first cladding portion 422 whose part extending from the outer periphery of core portion 412 to a position where the distance from the center of optical fiber preform 402 is within the range from 0.7 to 0.9 in terms of the ratio (a/d) with respect to the radius of optical fiber preform 402 is made of fluorine-doped glass, and the second cladding portion 432 whose part extending to the outer periphery from the position where the distance from the center of optical fiber preform 402 is within the range from 0.7 to 0.9 in terms of the ratio (a/d) with respect to the radius of optical fiber preform 402 is made of pure silica glass, the Rayleigh scattering intensity is restrained from increasing even when a high tension acts on the optical fiber 3, whereby the increase in loss can be suppressed. In order to prevent characteristics of the optical fiber 3 from being affected, the part where the distance from the center of optical fiber preform 402 is 0.7 or greater in terms of the ratio (a/d) with respect to the radius of optical fiber 402, as the part unrelated to transmission of light, is made of pure silica glass. If the part extending to the outer periphery from the position where the distance from the center is greater than 0.9 in terms of the ratio (a/d) with respect to the radius of optical fiber preform 402 is made of pure silica glass, the Rayleigh scattering intensity will change when the tension is enhanced, whereby transmission loss will increase.

When the drawing rate is high, since an He gas atmosphere is attained within the muffle tube 13 of drawing furnace 11, while air-cooling is carried out between the drawing furnace 11 and the heating furnace 21, so that the part of optical fiber 3 attaining a temperature higher than 1700°C before entering the heating furnace 21 is cooled at a cooling rate of 4000°C/s or higher, the height of equipment required for cooling the optical fiber 3 can be lowered. At a temperature higher than 1700°C, the structural relaxation of atoms proceeds in a very short period of time, so that the equilibrium state at each temperature can be maintained even when cooled at a cooling rate of 4000°C/s or higher, whereby no influence is exerted upon the Rayleigh scattering intensity.

**Industrial Applicability**

The apparatus and method for making an optical fiber in accordance with the present invention can be utilized in a drawing apparatus for drawing an optical fiber from an optical fiber preform, and the like.

**Claims**

1. Use of an apparatus for making an optical fiber for drawing an optical fiber perform (2) upon heating and coating thus drawn optical fiber with a resin; said apparatus comprising:

   a drawing furnace(11) for drawing said optical fiber preform upon heating;
   a resin coating section (31) for coating said drawn optical fiber with said resin; and
   a heating furnace (21), disposed between the drawing furnace (11) and the resin coating section (31) for heating said drawn optical fiber such that said drawn optical fiber attains a temperature within the range from 1200 to 1700°C;
   said heating furnace (21) having a muffle tube (23) for passing said drawn optical fiber;
   said muffle tube being disposed at a position satisfying:

$$L1 \leq 0.2 \times V$$

   where
   L1 is the distance (m) from the lower end of a heater in the drawing furnace to the upper end of said muffle tube; and
   V is the drawing rate (m/s),
   wherein said muffle tube is formed so as to satisfy:

$$L2 \geq V/8$$

   where
   L2 is the total length (m) of said muffle tube; and
   V is the drawing rate (m/s) .

2. Use of an apparatus for making an optical fiber according to claim 1, wherein said heating furnace (21) is configured to heat said drawn optical fiber at a temperature within the range from 1200 to 1600°C.

3. Use of an apparatus for making an optical fiber according to claim 1, wherein said muffle tube (23) is disposed at a position where said drawn optical fiber attains a temperature within the range from 1400 to 1800°C when entering said muffle tube.

4. Use of an apparatus for making an optical fiber according to claim 1, wherein said heating furnace (21) is provided with such a temperature gradient that the drawing furnace side and the resin coating section side attain higher and lower temperature, respectively.

**Patentansprüche**

1. Einsatz einer Vorrichtung zum Herstellen eines Lichtwellenleiters zum Ziehen einer Lichtwellenleiter-Vorform (2) beim Erhitzen und Beschichten eines so gezogenen Lichtwellenleiters mit einem Harz, wobei die Vorrichtung umfasst:

   einen Ziehofen (11) zum Ziehen der Lichtwellenleiter-Vorform beim Erhitzen;
   einen Harzbeschichtungsabschnitt (31) zum Beschichten des gezogenen Lichtwellenleiters mit dem Harz; und

einen Heizofen (21), der zwischen dem Ziehofen (11) und dem Harzbeschichtungsabschnitt (31) angeordnet ist und mit dem der gezogene Lichtwellenleiter so erhitzt wird,
dass der gezogene Lichtwellenleiter eine Temperatur in dem Bereich von 1200 bis 1700 °C erreicht;
wobei der Heizofen (21) eine Muffelröhre (23) zum Hindurchleiten des gezogenen Lichtwellenleiters aufweist; und die Muffelröhre an einer Position angeordnet ist, für die gilt:

$$L1 \leq 0{,}2 \times V$$

wobei
L1 der Abstand (m) von dem unteren Ende einer Heizeinrichtung in dem Ziehofen zu dem oberen Ende der Muffelröhre ist; und
V die Ziehgeschwindigkeit (m/s) ist,
und die Muffelröhre so ausgebildet ist, dass für sie gilt:

$$L2 \geq V/8$$

wobei
L2 die Gesamtlänge (m) der Muffelröhre ist; und
V die Ziehgeschwindigkeit (m/s) ist.

2. Einsatz einer Vorrichtung zum Herstellen eines Lichtwellenleiters nach Anspruch 1, wobei der Heizofen (21) so eingerichtet ist, dass er den gezogenen Lichtwellenleiter auf eine Temperatur in dem Bereich von 1200 bis 1600 °C erhitzt.

3. Einsatz einer Vorrichtung zum Herstellen eines Lichtwellenleiters nach Anspruch 1, wobei die Muffelröhre (23) an einer Position angeordnet ist, an der der gezogene Lichtwellenleiter eine Temperatur in dem Bereich von 1400 bis 1800 °C beim Eintreten in die Muffelröhre erreicht.

4. Einsatz einer Vorrichtung zum Herstellen eines Lichtwellenleiters nach Anspruch 1, wobei der Heizofen (21) ein Temperaturgefälle aufweist, durch das die Seite des Ziehofens und die Seite des Harzbeschichtungsabschnitts höhere bzw. niedrigere Temperatur erreichen.

**Revendications**

1. Utilisation d'un appareil pour fabriquer une fibre optique pour étirer une préforme de fibre optique (2) lors d'un chauffage et un revêtement de la fibre optique ainsi étirée avec une résine ; ledit appareil comprenant :

- un four d'étirage (11) pour étirer ladite préforme de fibre optique lors du chauffage ;
- une section de revêtement de résine (31) pour revêtir ladite fibre optique étirée avec ladite résine ; et
- un four de chauffage (21), disposé entre le four d'étirage (11) et la section de revêtement de résine (31), pour chauffer ladite fibre optique étirée de telle sorte que cette fibre optique étirée atteigne une température dans la plage de 1 200 à 1 700 °C;
- ledit four de chauffage (21) comportant un tube de moufle (23) pour traiter ladite fibre optique étirée ;
- ledit tube de moufle étant disposé à une position satisfaisant :

$$L1 \leq 0{,}2 \times V$$

où :

- L1 est la distance (en m) entre l'extrémité inférieure d'un dispositif de chauffage dans le four d'étirage et l'extrémité supérieure dudit tube de moufle ; et

- V est la vitesse d'étirage (en m/s),
- dans laquelle ledit tube de moufle est formé de manière à satisfaire :

$$L2 \geq V/8$$

où :
- L2 est la longueur totale (en m) dudit tube de moufle ; et
- V est la vitesse d'étirage (en m/s).

2. Utilisation d'un appareil pour fabriquer une fibre optique selon la revendication 1, dans laquelle ledit four de chauffage (21) est configuré pour chauffer ladite fibre optique étirée à une température dans la plage de 1 200 à 1 600 °C.

3. Utilisation d'un appareil pour fabriquer une fibre optique selon la revendication 1, dans laquelle ledit tube de moufle (23) est disposé à une position où ladite fibre optique étirée atteint une température dans la plage de 1 400 à 1 800 °C lorsqu'elle entre dans ledit tube de moufle.

4. Utilisation d'un appareil pour fabriquer une fibre optique selon la revendication 1, dans laquelle ledit four de chauffage (21) est prévu avec un gradient de température tel que le côté du four d'étirage et le côté de la section de revêtement de résine atteignent une température supérieure et inférieure, respectivement.

**Fig.1**

# Fig.2

| | L1 (m) | L2 (m) | CORE TUBE DIAMETER (mm) | DRAWING RATE (m/s) | TENSION (N) | HEATING FURNACE TEMPERATURE (°C) | ENTERING TEMPERATURE (°C) | EXITING TEMPERATURE (°C) | AVERAGE COOLING RATE (°C/s) | TRANSMISSION LOSS (dB/km) |
|---|---|---|---|---|---|---|---|---|---|---|
| EXAMPLE. 1 | 0. 4 | 0. 5 | 30 | 4 | 0. 196 | 1300 | 1600 | 1350 | 2000 | 0. 167 |
| EXAMPLE. 2 | 0. 4 | 1. 0 | 30 | 4 | 0. 196 | 1300 | 1600 | 1350 | 1000 | 0. 165 |
| EXAMPLE. 3 | 0. 4 | 2. 0 | 30 | 4 | 0. 196 | 1300 | 1600 | 1300 | 600 | 0. 164 |
| EXAMPLE. 4 | 0. 6 | 1. 0 | 30 | 4 | 0. 196 | 1300 | 1400 | 1300 | 250 | 0. 167 |
| COMP.EX. 1 | — | — | — | 2~10 | 0. 196 | — | — | — | 5000 | 0. 168 |
| COMP.EX. 2 | 1. 0 | 1. 0 | 30 | 4 | 0. 196 | 1300 | 1000 | — | — | 0. 168 |
| EXAMPLE. 5 | 0. 4 | 1. 0 | 30 | 4 | 0. 196 | 1500 | 1600 | 1530 | 280 | 0. 162 |
| EXAMPLE. 6 | 0. 4 | 1. 0 | 30 | 4 | 0. 196 | 1200 | 1600 | 1250 | 350 | 0. 167 |
| COMP.EX. 3 | 0. 4 | 1. 0 | 30 | 4 | 0. 196 | 1000 | 1600 | 1050 | 2200 | 0. 168 |
| EXAMPLE. 7 | 0. 8 | 1. 0 | 30 | 8 | 0. 196 | 1300 | 1700 | 1550 | 1200 | 0. 167 |
| EXAMPLE. 8 | 0. 8 | 2. 0 | 30 | 8 | 0. 196 | 1300 | 1700 | 1450 | 1000 | 0. 165 |
| COMP.EX. 4 | 0. 8 | 1. 0 | 30 | 8 | 0. 196 | 1300 | 1000 | — | — | 0. 168 |

EP 1 205 449 B1

# Fig.3

## Fig.4

## Fig.5

## Fig.6

| | L2 (m) | CORE TUBE DIAMETER (mm) | DRAWING RATE (m/min) | TENSION (N) | HEATING FURNACE TEMPERATURE (°C) | ENTERING TEMPERATURE (°C) | EXITING TEMPERATURE (°C) | AVERAGE COOLING RATE (°C/s) | TRANSMISSION LOSS (dB/km) |
|---|---|---|---|---|---|---|---|---|---|
| EXAMPLE.9 | 2. 0 | 30 | 100 | 0. 196 | 1400 | 1700 | 1450 | 250 | 0. 165 |
| EXAMPLE.10 | 2. 0 | 30 | 400 | 0. 294 | 1200 | 1550 | 1300 | 100 | 0. 167 |
| EXAMPLE.11 | 2. 0 | 30 | 100 | 0. 245 | 1450 | 1550 | 1500 | 250 | 0. 166 |
| EXAMPLE.12 | 2. 0 | 30 | 30 | 0. 196 | 1400 | 1700 | 1420 | 90 | 0. 160 |
| COMP.EX.5 | — | — | 100 | 0. 294 | — | — | — | 30000 | 0. 175 |
| COMP.EX.6 | — | — | 100 | 0. 196 | — | — | — | 5000 | 0. 170 |
| COMP.EX.7 | 2. 0 | 30 | 100 | 0. 294 | 900 | 1300 | 1000 | 250 | 0. 170 |
| EXAMPLE.13 | 2. 0 | 30 | 100 | 0. 196 | 1400 | 1700 | 1450 | 250 | 0. 164 |
| EXAMPLE.14 | 2. 0 | 30 | 100 | 0. 196 | 1400 | 1700 | 1450 | 250 | 0. 165 |
| EXAMPLE.15 | 2. 0 | 30 | 100 | 0. 196 | 1400 | 1700 | 1450 | 250 | 0. 164 |
| EXAMPLE.16 | 2. 0 | 30 | 100 | 0. 196 | 1400 | 1700 | 1450 | 250 | 0. 163 |
| EXAMPLE.17 | 2. 0 | 30 | 100 | 0. 196 | 1400 | 1700 | 1450 | 250 | 0. 165 |
| EXAMPLE.18 | 2. 0 | 30 | 100 | 0. 490 | 1450 | 1700 | 1450 | 250 | 0. 164 |
| EXAMPLE.19 | 2. 0 | 30 | 100 | 0. 490 | 1450 | 1700 | 1450 | 250 | 0. 166 |
| COMP.EX.8 | 2. 0 | 30 | 100 | 0. 490 | 1450 | 1700 | 1450 | 250 | 0. 176 |
| COMP.EX.9 | 2. 0 | 30 | 100 | 0. 490 | 1450 | 1700 | 1450 | 250 | 0. 185 |
| EXAMPLE.20 | 2. 0 | 30 | 480 | 0. 785 | 1400 | 1600 | 1500 | 500~700 | 0. 182 |

EP 1 205 449 B1

## Fig.7A

402

432

422

412

d

a

## Fig.7B

REFRACTIVE INDEX

n1

n2

# Fig.8

EP 1 205 449 B1

**EP 1 205 449 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI1025127 B
- EP 0464613 A1
- JP 61097143 A
- DE 3713029 A1